(19) Europäisches Patentamt / European Patent Office / Office européen des brevets

(11) **EP 3 939 833 B1**

(12) **EUROPEAN PATENT SPECIFICATION**

(45) Date of publication and mention
of the grant of the patent:
**07.06.2023 Bulletin 2023/23**

(21) Application number: **21185012.8**

(22) Date of filing: **12.07.2021**

(51) International Patent Classification (IPC):
**B60P 7/08** *(2006.01)*

(52) Cooperative Patent Classification (CPC):
**B60P 7/083**

(54) **COUPLING ELEMENT FOR TIE RODS, SYSTEM AND METHOD THEREOF**

KUPPLUNGSELEMENT FÜR VERBINDUNGSTEILE, SYSTEM UND VERFAHREN DAFÜR

ÉLÉMENT D'ACCOUPLEMENT POUR TIRANTS, SYSTÈME ET PROCÉDÉ CORRESPONDANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.07.2020 IT 202000016960**

(43) Date of publication of application:
**19.01.2022 Bulletin 2022/03**

(73) Proprietor: **Edil Cam Sistemi S.r.l.**
**00143 Roma (RM) (IT)**

(72) Inventor: **VARI, Alessandro**
**00143 Roma (RM) (IT)**

(74) Representative: **Mulas, Chiara et al**
**Barzanò & Zanardo Roma S.p.A.**
**Via Piemonte, 26**
**00187 Roma (IT)**

(56) References cited:
**EP-A1- 1 712 458      FR-A1- 2 569 336
GB-A- 1 235 356      US-A1- 2016 193 982**

**Description**

This invention relates to a coupling element for tie rods and a relative coupling system.

In particular, this invention relates to an element for locking and tightening tie rods, such as for example cables, strands, bands or straps.

The invention also relates to a method for forming and tightening such tie-rod couplings.

More precisely, this invention relates to a coupling element capable of joining, locking and tightening both two edges or ends of respective tie rods and two edges of the same tie rod to form a closed link.

This invention therefore falls within the field of tie rod closing devices, such as for example bands or straps used in the building sector for creating hooping and/or tightening for masonry or reinforced concrete artefacts, i.e. pre- or post-tensioning systems in public structures such as bridges, viaducts, prefabricated structures.

However, this application is not to be construed as limiting.

For convenience, the description herein below refers to a coupling and tightening/tensioning element for straps for forming a tie-rod system, wherein:

- the term tightening means pulling the tie rod, whether it is open or closed on itself;
- the term tensioning refers to the extent of the tightening itself; and
- the term tie rodding means the complete and installed object made up of the tie rod and the coupling; the classic chain used in masonry structures as an anti-overturning constraint element or for example, in the structures present when arches and vaults are set up, is generally called tie rodding. Finally, it can be individual, as just described, or spread out as in the case of the system described in Italian Patent No. 1 01999900805279.

This invention is also applicable to tie rods for bridges, to post-tensioning cables and/or strands, to industrial packing systems (so-called straps), or to single tie-rod systems (structural and non-structural chains) or widespread (widespread chaining) tie-rod systems, such as for example the systems described in Italian Patent No. 101999900805279 for the hooping and/or tie-rodding of masonry artefacts.

As is known, various coupling elements have been proposed in order to couple the ends of two different straps or of the same strap, so as to close it on itself.

There are different materials and shapes of metal and/or plastic elements (cables, strands, straps, etc.) with relative locking and tensioning systems in the field of tensile structures and tie-rod systems.

However, there are no known elements or systems capable of performing both tightening and locking functions together, and even fewer locking systems which ensure the full exploitation of the strength of the element to be locked.

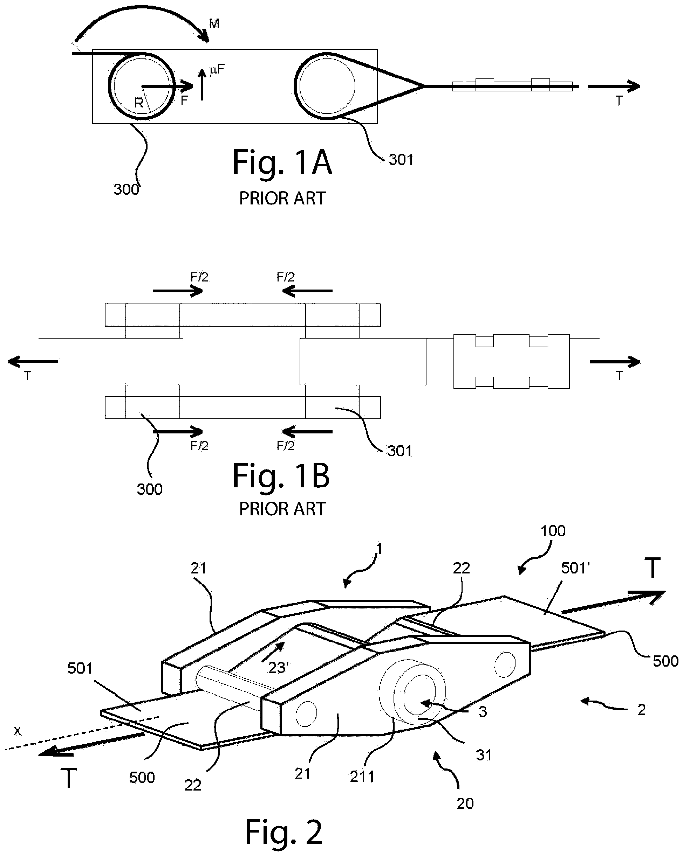

In particular, as shown in Figures 1A and 1B, the prior art coupling systems generally comprise two locking means 300, 301, one for each tie-rod end to be coupled, wherein a first locking means 300 may be a pin 300 for locking a first tie-rod end by winding, ensuring 100% effective locking, and the second locking means 301 is not a pin, being for example a knot, tie or the like, for locking the second tie-rod end to be coupled by deformation, cutting or welding, without guaranteeing 100% effective locking.

In the case described wherein a pin 300 locks only one end of a tie rod and this tie rod is under tension, it can be seen how the pin is shear stressed.

The pulling action of the tie rod, carried to the pin 300 through the shear stress, is finally balanced by means of the contrast exerted on two perforated forks inside which the pin rotates. However, this condition triggers a localized compression action (bearing down on the edge of the hole) at the ends of the pin (i.e. the portions of the pin that slide inside the two end holes) and frictional forces that are difficult to control are formed at the same time due to this compression action. It is precisely the formation of these frictional forces that limits the possibility of controlling the correct tensioning of the straps to be coupled.

With particular reference to Figures 1A and 1B, it can be seen that by applying a torsional torque $M$ on the pin 300 at the point where one end of the tie rod is locked, the pull $T$ applied to the tie rod in ideal conditions with no friction is a function only of the radius $R$ of the formed spool (i.e. the radius of the pin 300 plus the thickness of the tie-rod windings on it), thus being equal to:

$$T = M / R;$$

Two balancing forces $F/2$ are generated in the fork holes, with a total value ideally equal to $T = 2 \cdot F/2 = F$.

However, by introducing the friction effect, which is always present, the effective force $T$ exerted on the tie rod is lower than the ideal one, being equal to

$$T = (M - \mu F \cdot R) / R;$$
$$= M / R - \mu T;$$

therefore:

$$T = M / (R (1 + \mu)) = \lambda M / R;$$

where:

$$\lambda = 1 / (1 + \mu).$$

Considering that the value of the friction coefficient $\mu$ generated by a rotating pin 300 may oscillate in a range between $\mu$ = 0.2 - 1.0, a coefficient is obtained $\lambda$ that can vary between $\lambda$ = 0.5 - 0.8, and consequently, a wide variation in the pull $T$ applied to the tie rod.

In this context, it is noted that the tie rods must generally be tightened at very specific and precise tension values, such as in cases of external prestressing of bridges/viaducts or confinement of pillars. In general, with respect to a theoretical design value, real tensioning values with deviations not greater than 10-15% are accepted. It is clear that the tensioning is in vain if the value of $T$, which is not known beforehand and depends on the specific case due to friction, as just explained, has a greater variability, for example between 20% and 50%, compared to the acceptable variability for the specific application, which is usually between 10% and 15%.

Document FR 2 569 336 A1 discloses the preamble of claim 1.

The aim of this invention is to overcome the limitations of the known art.

In particular, the aim of this invention is to provide a new coupling and tightening element for metal and/or plastic tie rods, capable of allowing the full exploitation of their tensile strength.

A further aim of this invention is that this coupling and tightening element be reliable over time.

Again, it is an aim of this invention for this coupling and tightening element to be simple to use.

Furthermore, the aim of this invention is for this coupling and tightening element to be economical, both with regards to its production and for its maintenance within a coupling system.

Finally, the aim of this invention is to provide a method for coupling and tightening two ends of tie rods that is quick to implement and has the ability to re-tighten the tie rods after the first application, which is normal practice in the case of the post-tensioning of bridges and viaducts and/or visible chains applied to wall elements such as domes, arches, vaults.

Therefore, the object of this invention is a coupling element for coupling two portions to be coupled of at least one tie rod, said coupling element comprising:

a body comprising two opposite side openings for the passage of a respective portion to be coupled of said at least one tie rod, said openings being arranged along a first longitudinal axis,

a pin arranged along a second transversal axis substantially perpendicular to said first longitudinal axis, said pin comprising at least one slot, in particular a slot along said transversal axis, adapted to insert said portions to be coupled, said pin being arranged between said side openings and being coupled to the body in a rotatable manner so as to be able to rotate on itself around said second transversal axis, and

locking means for locking said pin on said body so as to prevent its rotation on said second transversal axis along at least one rotational direction. In particular, said coupling element is configured so that during use, when said portions to be coupled are inserted into said slot and overlap one another after passing through a respective side opening, they are coupled together by rotating said pin on said second transversal axis and subsequent locking by said locking means.

In particular, said pin may comprise at least one shaped base and said locking means may comprise complementary shaped means which may be coupled to said at least one shaped base. In this case, said at least one complementary shaped element may be arranged on said body or may be removably fixed thereto by means of fastening means.

According to the invention, said complementary shaped means may be at least one pair of worm screws arranged on said body along a direction parallel to said longitudinal axis and surrounding said shaped base, said worm screws having a complementary shape to the toothing of said base of said pin and configured in such a way that during use, rotation of said shaped base is allowed only when an outer torque is applied to said worm screws along a predetermined rotational direction, thus putting them in rotation, and in such a way as to prevent their inverse rotation in the direction opposite to said predetermined direction.

Alternatively according to the invention, said shaped base may comprise ridges and said complementary shaped means may be an external element comprising a ridged hole, said ridged hole having complementary ridges which may be coupled to said ridges of said shaped base.

Furthermore, said cylindrical-shaped side elements of said body may comprise at least one protrusion protruding from said opposing plates; said external element may comprise at least one side hole which may be coupled to said at least one protrusion and may be fixed thereon in a removable manner.

In a further alternative according to the invention, said shaped base may comprise ridges and said complementary shaped means may be a ridged hole obtained on said body, said ridged hole being able to have complementary ridges which may be coupled to said ridges of said shaped base. In this configuration, said pin may move along said second transversal axis so as to have a first configuration wherein said shaped base is not inserted into said ridged hole, and a second configuration wherein said shaped base is inserted into said ridged hole in such a way as to lock the rotation of said pin.

In a further alternative according to the invention, said complementary shaped means may be an indented hole obtained on said body, comprising at least one indentation which is movable under stress along a predetermined rotational direction, in particular it being able to be deformable/rotatable or subject to other types of displacement when stressed along said predetermined rotational direction, and said shaped base may have toothings complementary to said at least one movable indentation of said body, said indentations of said hole and of said base being adapted to provide at least one click-type ratchet so such that the pin may rotate around said second transversal axis only if at least a predetermined torque is applied along said predetermined rotational direction.

In a further alternative according to the invention, said pin may comprise:

a central portion having a first diameter, on which there is said slot,
two tapered side portions optionally comprising ridges and/or knurlings, said side portions being arranged around said central portion, and
two cylindrical bases having a second diameter smaller than said first diameter so as to allow the locking of said pin on said body by means of forced keying by interference.

According to the invention, said body may comprise a central portion coupled to said pin and two folding points placed laterally to said central portion for folding said portions to be coupled, said side openings being able to be arranged between a respective folding point and said central portion.

In particular according to the invention, said folding points may be two side elements, preferably cylindrical in shape, arranged parallel to said second transversal axis, said body being able to comprise two opposite plates extending on planes parallel to a plane orthogonal to said second transversal axis and joined by said two side elements and by said pin so that the spaces delimited by said plates, by said pin and by said side elements form said side openings.

Furthermore according to the invention, said folding points may be the upper or lower edges of two slots obtained in said body along said longitudinal axis.

Furthermore according to the invention, said pin may have a substantially cylindrical shape, the axis of said substantially cylindrical shape being able to be arranged along said second transversal axis, said slot being centrally arranged in said cylindrical shape.

Again according to the invention, said coupling element may comprise at least two pins for coupling at least two pairs of portions to be coupled of tie rods.

A further object of this invention is a coupling system characterised in that it comprises a coupling element according to this invention, and at least one tie rod comprising two portions to be coupled, each of said portions to be coupled passing through a respective side opening of said body and being inserted into said at least one slot, said portions to be coupled overlapping one another at said slot.

According to the invention, said portions to be coupled of said at least one tie rod may be coupled together being wound around said pin so that said portions to be coupled are coupled together without shear stresses on said pin.

Furthermore according to the invention, a first portion to be coupled of said at least one tie rod may be folded at a first folding point of said body, touching at least below it, and a second portion to be coupled of said at least one tie rod may be folded at a second folding point of said body, touching at least above it, so as to ensure the locking at the rotation of said body due to the contrast generated between each portion to be coupled and the respective folding point.

Again according to the invention, said tie rods may be straps made of metallic material.

A further object of this invention is a coupling method for coupling two ends of at least one tie rod by means of a coupling element according to the invention, comprising the following steps:

A. inserting a first portion to be coupled of said at least one tie rod into said slot of said pin, through a first side opening;
B. inserting a second portion to be coupled of said at least one tie rod into said slot of said pin through a second side opening, opposite to the first;

C. overlapping said portions to be coupled of said at least one tie rod at said slot of said pin;

D. rotating said pin around said second transversal axis along a first rotational direction by at least a first half-turn; and

E. locking said pin on said body by means of said locking means so as to prevent its rotation around said second transversal axis.

According to the invention, during said step D, said pin may be rotated by a number of turns such as to shorten said portions to be coupled of said at least one tie rod by a predetermined length and impose a predetermined tension.

Furthermore, said number of turns of said pin may be a function of the length of said pin along said first longitudinal axis, of the length of said portions to be coupled along said first longitudinal axis and the thickness of said tie rods.

Again according to the invention, said number of rotations may be calculated as a function of the material of said at least one tie rod and the final length of said at least one tie rod.

Furthermore according to the invention, during said step C, each portion to be coupled of said at least one tie rod may be arranged in such a way as to partially protrude from said slot of said pin in the direction opposite to the respective side opening.

Furthermore, a method according to the invention may comprise the following step:

F. manually or automatically putting each portion to be coupled of said at least one tie rod in touch with a folding point of said body and folding said portion to be coupled at said folding point in such a way as to ensure the achievement of a stable equilibrium and prevent the rotation of said body on itself.

Again according to the invention, said pin may be made to rotate during said step D by the action of a drill or screwdriver with adjustable torque.

Finally, a further object of this invention is a building artefact comprising at least one building element tied with a coupling system according to this invention.

In particular, a building artefact according to the invention may be obtained by tying and/or winding at least one building element with said at least one tie rod and carrying out a method according to this invention for coupling the portions to be coupled of said at least one tie rod.

In particular according to the invention, said building element may be a reinforced concrete element or a masonry element or a bridge beam.

The invention is now described, by way of example and without limiting the scope of the invention, with reference to the accompanying drawings, wherein:

Figure 1A shows a front view of a coupling system of the known art, applied to two respective ends of straps, and of the relative diagram of forces acting on it;

Figure 1B shows the top view of the coupling system of Figure 1A, with the relative diagram of acting forces;

Figure 2 shows an axonometric view of a coupling system according to this invention, comprising a first embodiment of a coupling element according to this invention and two ends of straps connected thereto;

Figure 3 shows a front section of the coupling system of Figure 2, during use;

Figure 4 shows a top view of the coupling system of Figure 2;

Figure 5 shows a top sectional view of the coupling element of the coupling system of Figure 2;

Figure 6 shows a detail of a top view of a second embodiment of a coupling element according to this invention, comprising a pin and external locking means for locking the rotation of the pin;

Figures 7A-7D show perspective views from above of the coupling element of Figure 6, in four respective steps of inserting and locking the pin;

Figure 8 shows a detail of a top view of a third embodiment of a coupling element according to this invention, comprising a pin and internal locking means for locking the rotation of the pin;

Figures 9A-9D show perspective views from above of the coupling element of Figure 8, in four respective steps of inserting and locking the pin;

Figure 10A shows a front view of a fourth embodiment of a coupling element according to this invention, comprising a pin and internal locking means for locking the rotation of the pin by means of a snap locking system;

Figures 10B and 10C show front views of two respective locking configurations for the coupling element of Figure 10A, wherein the internal locking means for locking the rotation of the pin acting in the configuration shown are indicated with specific arrows;

Figure 10D shows a top view of a first variant of the coupling element of Figures 10A-10C;

Figures 10E and 10F show a top view and a perspective view, respectively, of a second variant of the coupling element of Figures 10A-10C;

Figure 11A shows a top view of a fifth embodiment of a coupling element according to this invention, comprising a pin having a cylindrical central portion and two distal portions with frustoconical sections;

Figure 11B shows a front view of the coupling element of Figure 11A;

Figure 11C shows an exploded sectional view of the forced keying by interference system used for locking the pin of the coupling element of Figure 11A;

Figures 11D-11E show top views of two respective locking configurations for the coupling element of Figure 11A, wherein the internal locking means for locking the rotation of the pin act by means of forced keying by interference;

Figure 12A shows a top perspective view of a sixth embodiment of a coupling element according to this invention, comprising a pin and four worm screws coupled to said pin;

Figure 12B shows the view of Figure 12A, wherein the body of the coupling element is shown in transparency;

Figure 12C shows a front view of the coupling system of Figure 12B;

Figure 12D shows a perspective view of a front section of the coupling element of Figure 12A;

Figure 12E shows a front view of the front section of Figure 12D;

Figure 12F shows a top view of the coupling element of Figure 12A;

Figure 12G shows the view of Figure 12F, wherein the body of the coupling element is shown in transparency;

Figure 13 shows a coupling system according to this invention, comprising a seventh embodiment of a coupling element according to this invention, wherein two pairs of portions of straps are locked;

Figure 14A shows a sectional front view of the pin of a coupling system according to this invention, during a first step of inserting two respective ends of straps;

Figure 14B shows a sectional front view of the pin of Figure 14A, during a second step, wherein the first winding of the ends of the straps and their locking takes place at the same time;

Figure 14C shows a detail of Figure 14B;

Figures 14D-14F show a sectional front view of the pin of Figure 14A, during a third step, wherein the pulling of said ends of straps is activated, and continuing with the winding of the ends of straps, the desired tensioning is calibrated;

Figure 14G shows a sectional front view of the pin of Figure 14A, with the straps tensioned;

Figure 15A shows a top view of the coupling system of Figure 2 during the first winding step of the ends of the straps by means of rotation means, wherein a torque ranging from 0 to $M_p$ is imposed;

Figure 15B shows a front view of the coupling system of Figure 15A;

Figure 15C shows a top view of the coupling system of Figure 15A wherein, once the desired torque $M_p$ is reached, the body of said coupling element is rotated by means of said rotation means until folding points of the coupling system are put in touch with the straps;

Figure 15D shows a front view of the coupling system of Figure 15C;

Figure 15E shows a top view of the coupling system of Figure 15A, in a step of removing said rotation means;

Figure 15F shows a front view of the coupling system of Figure 15E, wherein a static equilibrium of forces has been achieved;

Figure 16 shows an enlargement of Figure 15D, wherein a torque which varies from 0 to $M_p$ is imposed on the pin through rotation means;

Figure 17 shows a sectional front view of the coupling system of Figure 15F, which shows the diagram of the forces acting on this coupling system once the pin has been locked, and wherein the torque applied to the pin is induced by the pull of the straps;

Figure 18 shows a sectional front view of the coupling system of Figure 15F, which shows the diagram of the forces acting on this coupling system and on the straps;

Figure 19 shows a sectional front view of the coupling system of Figure 15F, which shows the diagram of the forces acting on this coupling system and on the straps, comprising the frictional forces;

Figures 20A-20B show perspective views of two respective steps of a tensile test of a coupling system comprising the coupling element of Figure 8 and two coupled ends of straps;

Figure 21 shows a diagram showing the necessary rotation value (expressed in radians) to reach the desired ratio between the maximum tensioning applied to the strap and the force necessary to remove the strap from the first fold, with respect to the friction coefficient between straps according to different desired ratios;

Figure 22 shows a diagram showing the rotation value of the pin (expressed in radians) to bring the strap or tie rod to the condition of zero backlash, as a function of the total length of the tie rod with respect to two different types of tie rods having different lengths; and

Figure 23 shows a diagram showing the rotation value of the strap or tie rod (expressed in radians) to bring the strap to the desired tightening as a function of the length of the tie rod itself and its type.

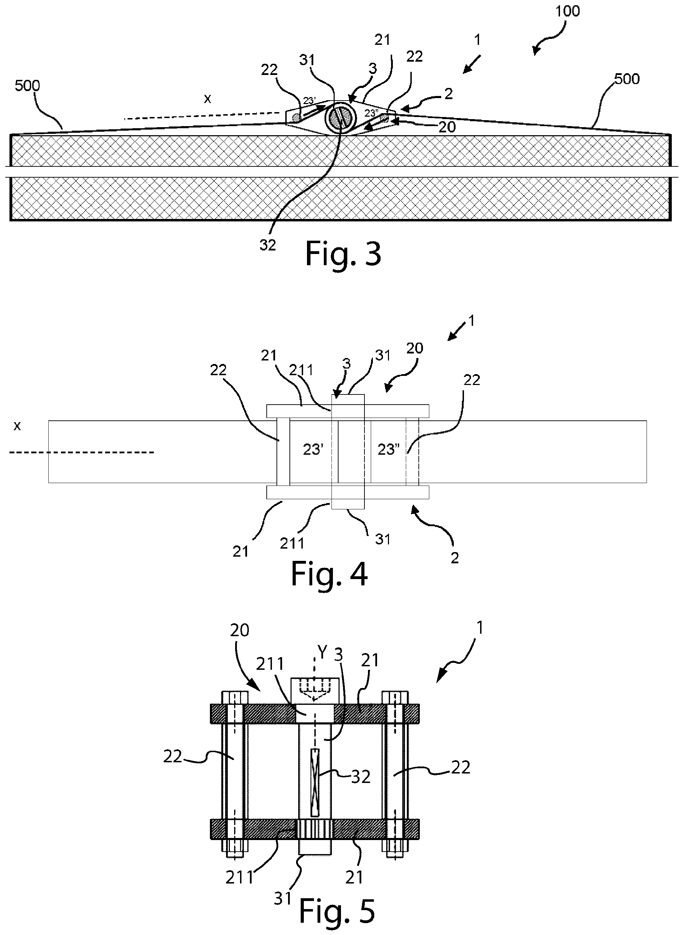

With particular reference to Figures 2-5 and 14A-14G, numerical reference 1 is assigned to a coupling element according to this invention, for locking and tightening two portions to be coupled 501, 501' of tie rods 500, which in the case shown, are straps 500, in particular straps 500 made of metallic material.

In particular, this coupling element 1 may be coupled with the portions to be coupled 501, 501' of straps 500 to lock them in position and tighten them, thus forming the coupling system 100 according to the invention.

The strap ends may be of a single strap, closed on itself, or of two different straps.

The coupling element 1 comprises:

a body 2,

a pin 3 for locking the portions to be coupled 501, 501' of straps 500, coupled to the body 2 in such a way as to be able to rotate on itself around a transversal axis y, and

locking means 4, 42, 420 or 25, 211 or 26, 211 for locking said pin 3 on said body 2 so as to prevent its rotation along at least one rotational direction.

In particular, the body 2 is preferably made of metallic material and comprises a central portion 20 and two side elements 22, also called contrast elements 22 or folding points 22.

In the embodiment shown in Figures 2-13, 15-19, the body 2 has two side elements 22, substantially cylindrical in shape, and two opposing plates 21 joined together by said two side elements 22. In particular, each side element 22 is coupled to the two plates 21.

In this way, said side elements 22 consist of two folding points 22 for the portions to be coupled 501, 501' of said straps 500. However in alternative embodiments, these folding points may have different shapes from the one of the side elements 22 described and may be placed in different positions of the body 2, as illustrated below.

The space between said side elements 22 and the central portion 20 therefore forms two respective side openings 23', 23", also called side passageways 23', 23", for the portions to be coupled 501, 501' of said straps 500.

In particular, a first portion to be coupled 501 may be inserted into a first side opening 23' so as to touch below the respective folding point 22, while a second portion to be coupled 501' may be inserted into a second side opening 23" so as to touch above the respective folding point 22.

The portions to be coupled 501, 501' thus inserted are therefore parallel to a longitudinal direction x, but are not aligned, for the reasons illustrated below.

Each plate 21 also comprises a respective central hole 211 for the passage of said pin 3, as illustrated below.

In summary, in the embodiment shown in the figures, the body 2 has a substantially "buckle" shape with central holes 211 for the passage of said pin 3.

In alternative embodiments, the body 2 may have a different shape from that shown in the figures, comprising coupling means for the pin 3 and relative rotation locking means.

The folding points 22 advantageously allow the body 2 to be locked with respect to rotation, since they exert a contrasting force on the ends of the straps, thus avoiding their unwinding, as explained in greater detail below.

The pin 3 has a cylindrical shape arranged along a transversal axis y and comprises two bases 31, each base 31 being inserted into one of said central holes 211 of the plates 21 of said body 2 in such a way that said pin 3 is free to rotate around its own transversal axis y.

The pin 3 is therefore free to rotate in the body 2 when the pin 3 is not locked on it. The locking of the pin 3 on the body 2 may take place by coupling the bases 31 on said central holes 211, for example by means of suitable indentations, as illustrated below.

Furthermore, said pin 3 has a housing 32, in particular a central slot 32, adapted to insert two portions to be coupled 501, 501' of straps 500 inserted through the side openings 23', 23" of the body 2.

In particular, the pin 3 has a single slot 32 per pair of portions to be coupled 501, 501' of straps 500, which must enter the same slot 32, or it may have two distinct slots (not shown in the figures).

In further alternative embodiments, there may be two or more pins 3 for locking two or more pairs of portions to be coupled 501, 501', as illustrated below.

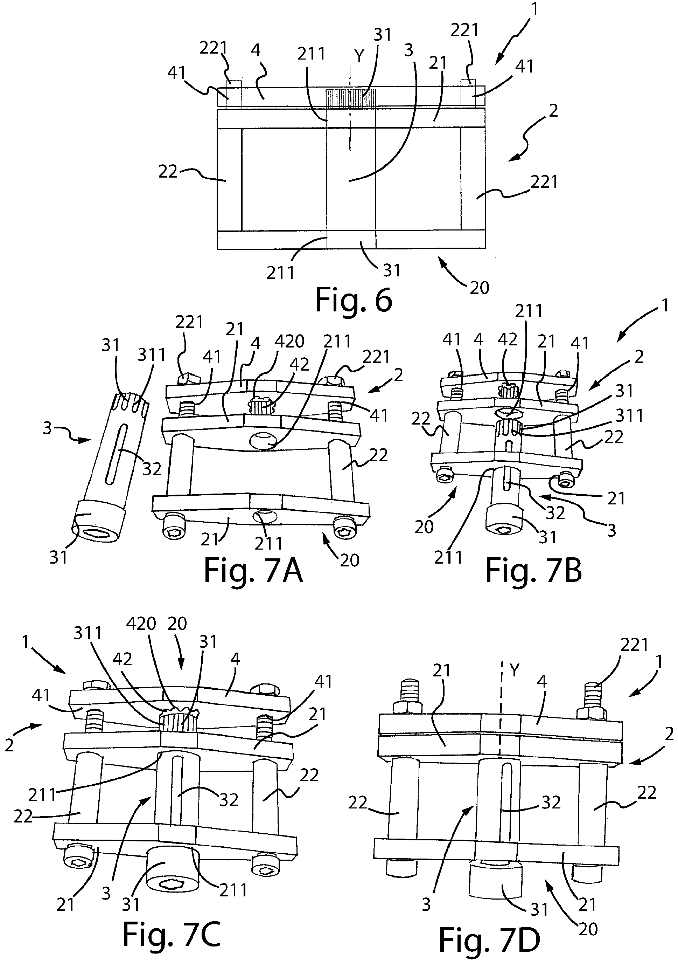

With particular reference to the variant of the coupling element 1 of Figures 6 and 7A-7D, at least one base 31 of the pin 3 may be a shaped base 31 which has ridges 311, and the side elements 22 may protrude externally from said plates 21. In this case, the locking means for locking the rotation of the pin 3 may comprise an external element 4 comprising two side holes 41 and a ridged central hole 42 with ridges 420 which are complementary to the ridges 311 of said at least one base 31. In particular, each side hole 41 is aligned with and removably coupled to a respective protrusion 221 of the side element 22 of the body 2, and said ridged hole 42 is aligned with and removably coupled to said at least one shaped base 31 of the pin 3 with ridges 311 in such a way as to be able to lock the pin 3 on the body 2.

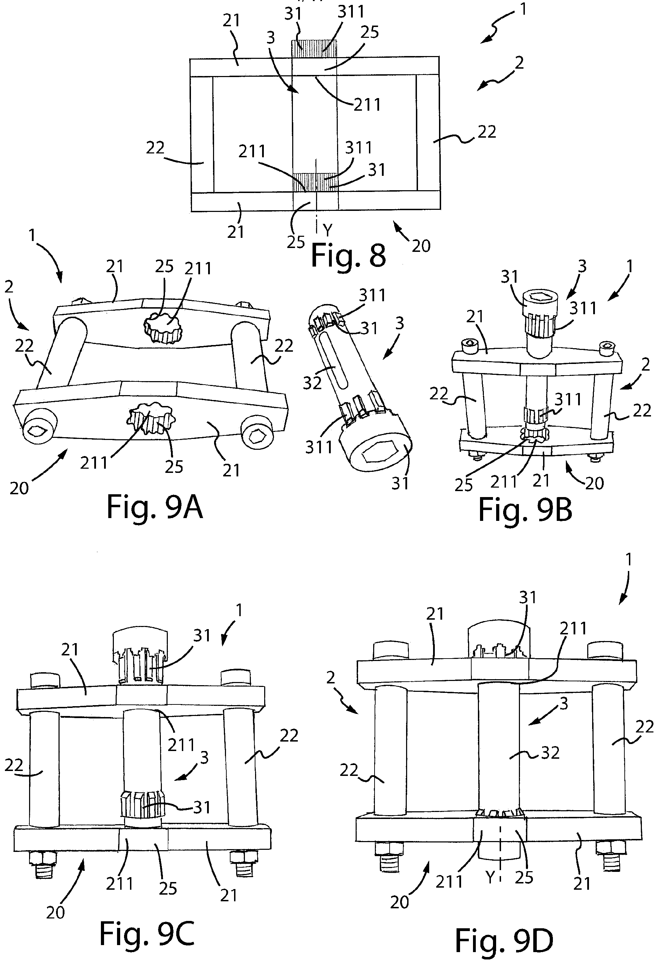

In an alternative embodiment, with particular reference to the variant of the coupling element 1 of Figures 8 and 9A-9D, the pin 3 coupled to the body 2 is free to at least partially move along its axis y, and it comprises at least two shaped bases 31 with ridges 311. In alternative embodiments, there may also be a single shaped base 31 with ridges 311. In this way, the central hole 211 of at least one plate 21, at a respective shaped base 31 with ridges 311, may have ridges 25 which are complementary to those of said at least one shaped base 31 so that by moving the pin 3 along its transversal axis y, said at least one shaped base 31 may be inserted into the central hole 211, thus being locked in position with respect to the body 2.

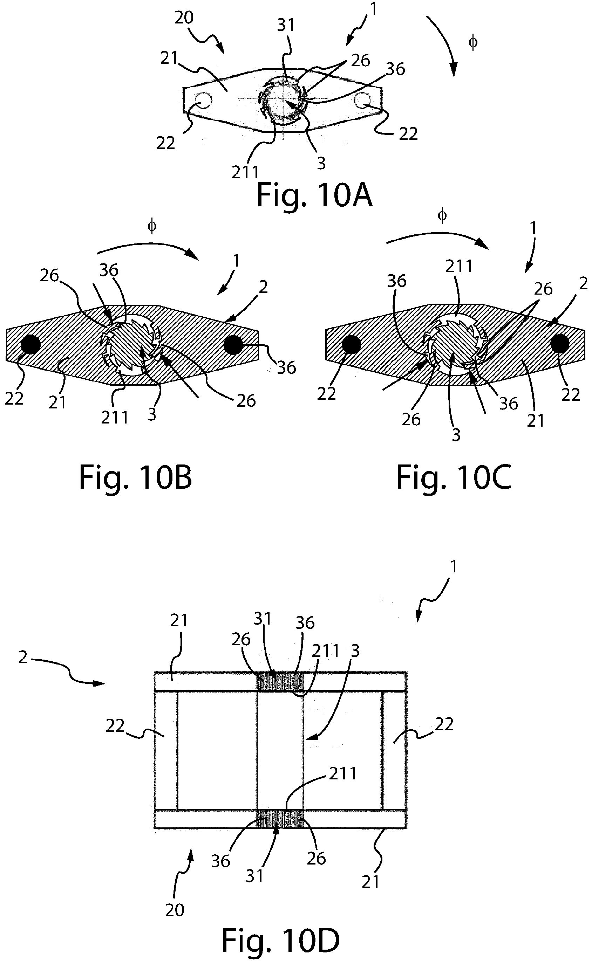

In a further alternative embodiment, with particular reference to the variant of the coupling element 1 of Figures 10A-10F, the pin 3 has two shaped bases 31 coupled to the respective central hole 211 of a relative plate 21 of the body 2. In alternative embodiments, there may also be a single shaped base 31 coupled to the respective central hole 211 of a relative plate 21 of the body 2.

In these embodiments, both the shaped base 31 and said central hole 211 of the relative plate 21 have complementary toothings 36, 26, wherein the number of toothings 26 of the plate 21 is less than or equal to the number of the toothings 36 of the base 31, and the toothings 26 of the plate 21 may be subject to deformation/displacement only when the pin 3 is rotated in a predetermined rotational direction φ around its axis y so as to form a plurality of ratchet couplings with a particular pitch, in particular click-type ratchet couplings. In this way, it is advantageously possible to obtain a snap locking system, wherein the pin 3 may always rotate by a finite number of rotations, equal to the pitch of the toothings, without the need to be translated along its axis y. Once the space between two adjacent toothings has been crossed, the pin 3 advantageously locks in position and the toothings 26 of the plate 21 prevent rotation in the direction opposite to said predetermined rotational direction φ. However, by applying a further torque on the pin 3, it may rotate by a further finite rotation, equal to the distance between adjacent teeth 36, 26.

With particular reference to Figures 10B and 10C, three toothed elements 26 per side of the body 2 can be seen, to which the teeth 36 of the pin 3 may be coupled. These toothed elements 26 are offset by an angle equal to the pitch of the teeth 36 of the pin 3 so as to allow the total number of teeth to be reduced (in this case, there are twelve teeth 36 on the pin 3 and six toothed elements 26 on the body 2).

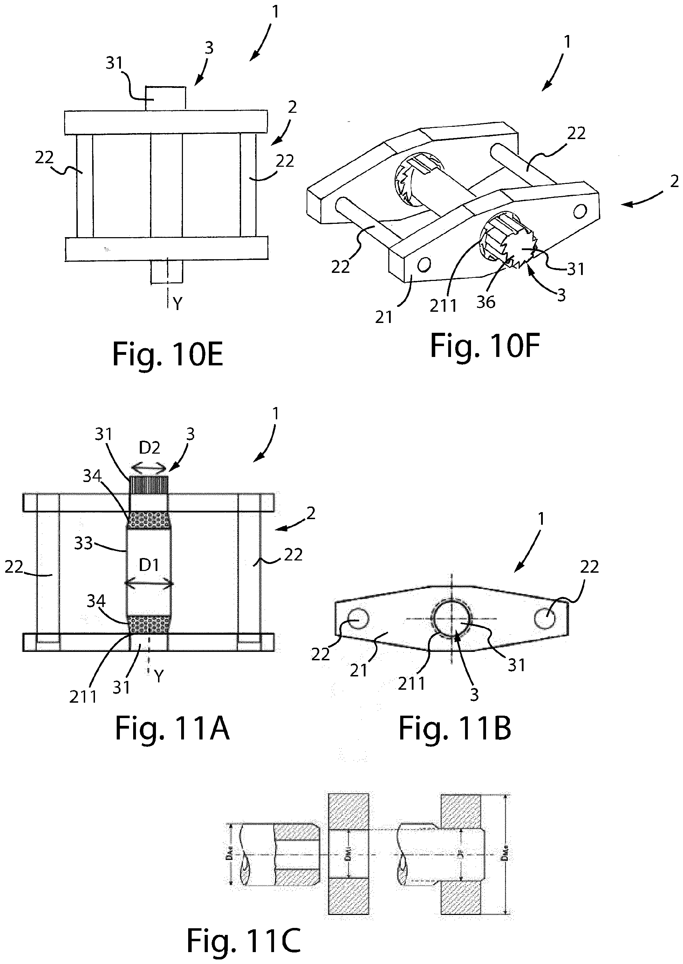

The bases 31 of the pin 3 may be flush with the body 2, as shown in Figure 10D, or protrude from the central holes 211, as shown in Figures 10E and 10F.

With particular reference to Figure 10F moreover, it shows that the teeth 36 of the pin 3 and the toothed elements 26 of the body 2 are in contact when in the tightening position, allowing to keep the locking system 100 always tightened and at the same time able to be recalibrated at any time.

In a further alternative embodiment, with particular reference to the variant of the coupling element 1 of Figures 11A-11E, the pin 3 comprises a central portion 33 having a first constant diameter D1, wherein there is the slot 32 for the insertion of the straps 500 (not shown in the figures).

The pin 3 also comprises two side portions 34 having a frustoconical shape, which surround said central portion 33, having knurled or ridged surface finishes, adapted to provide a rough surface.

The pin 3 according to this embodiment finally comprises two cylindrical bases 31 having a second diameter D2 which is smaller than said first diameter D1. The central hole 211 of each plate 21 has a diameter which is substantially equal to said second diameter D2, thus allowing free rotation of the pin 3.

The locking of this pin 3 may take place according to the technique of forced keying by interference, as shown in Figure 11C.

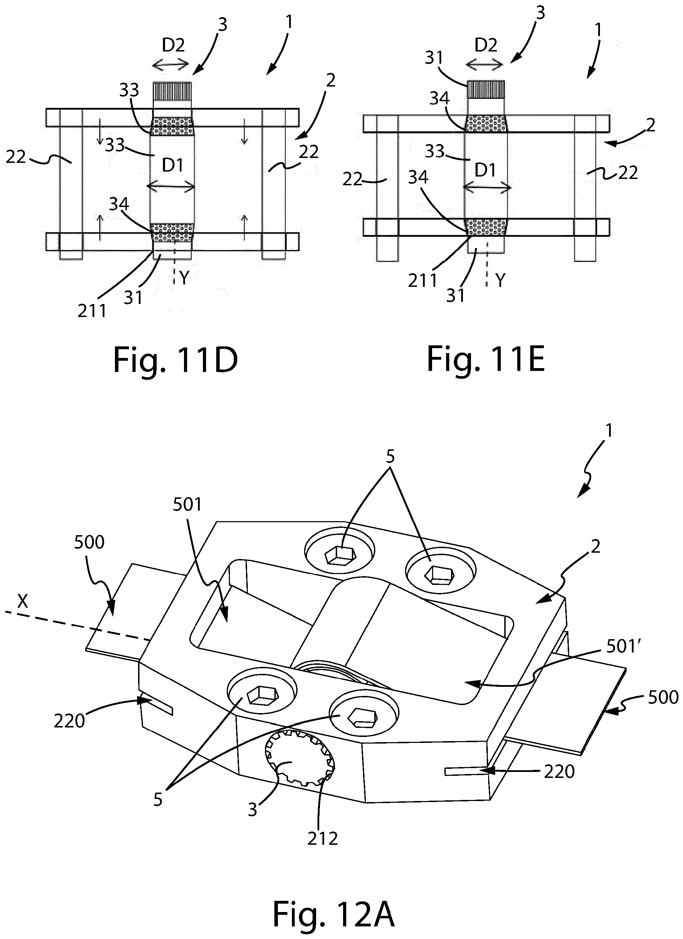

With particular reference to Figure 11D, the locking takes place by bringing the two plates 21 together, forcing the central hole 211 to increase in diameter by contrast applied by the knurled frustoconical-shaped side portions 34 of the pin 3, until the final configuration shown in Figure 11E is reached. This locking method is based on the friction generated between the two interfering surfaces (central hole 211 of the plates 21 with reduced diameter and side portions 34 of the pin 3 having an increasing diameter), thanks to the resulting radial pressure. In other embodiments, the pin 3 may have different shapes from the one just described, but capable of exploiting the locking by forced keying by interference.

This locking method has the advantage of not having predefined locking positions (as for example, in the case of the toothed pin 3 of Figures 10A-10F), but it is possible to lock the pin 3 in any angle of rotation imposed.

However, this locking method has the disadvantage that it cannot be modified subsequently, since it involves the irreversible deformation of the central holes 211, without the possibility of restoring the original locking performance.

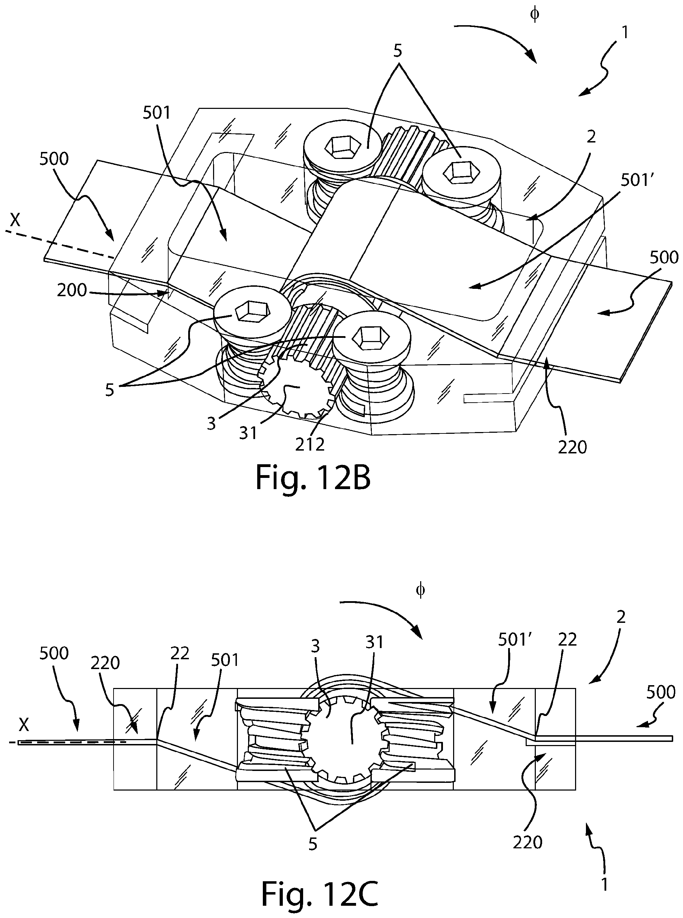

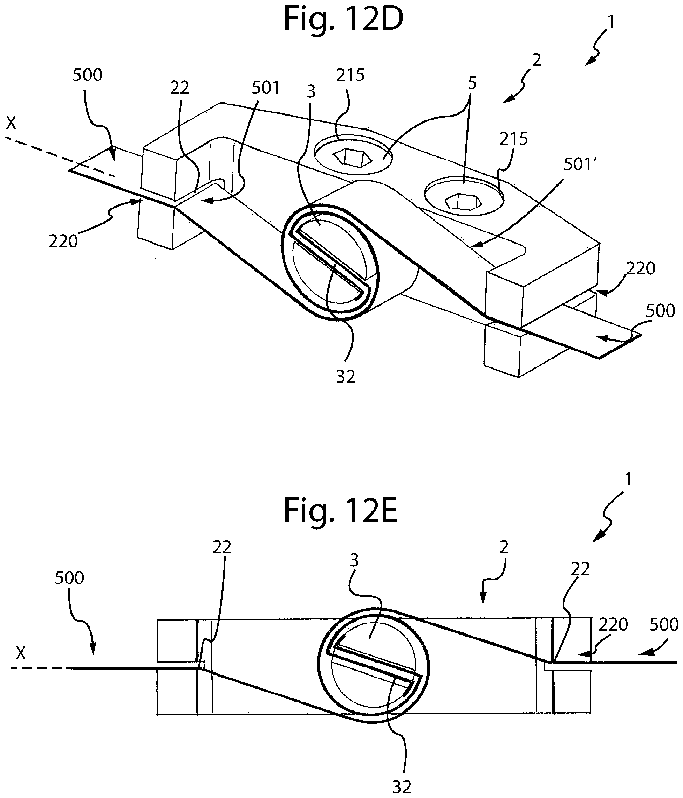

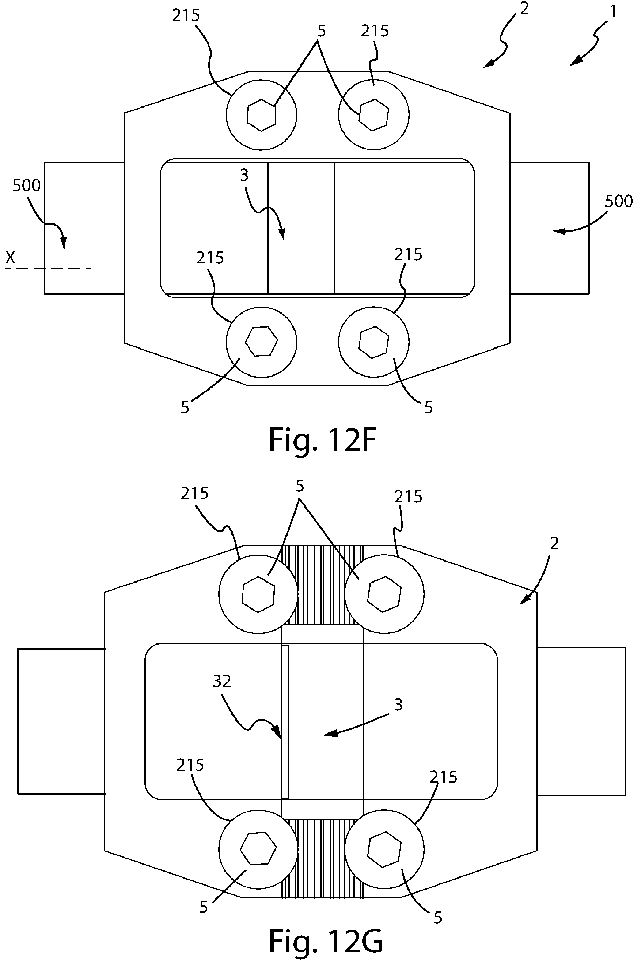

In a further alternative embodiment, with particular reference to the variant of the coupling element 1 of Figures 12A-12G, it shows that a coupling element 100 according to this invention may comprise a body 2 made as a monobloc element comprising the folding points 22 therein. With particular reference to Figures 12A-12E, the two folding points 22 may be formed by the upper or lower edges 22 of two slots 220, in particular two slots 220 aligned with each other, obtained on opposite sides of the body 2 with respect to said longitudinal axis x.

In this case, each portion to be coupled 501, 501' of strap 500 is inserted into the respective slot 220 and touches each folding point 22 above it or below it so that the coupling of the two portions to be coupled 501, 501' takes place with the same mechanism as described for the previous embodiments.

In this embodiment moreover, it is shown that a pin 3 with at least one shaped base 31 can be locked on said body 2 through the use of worm screws 5 having a complementary shape to said base 31, in particular enveloping self-locking worm screws 5. In the particular embodiment shown, there are four worm screws 5 at each shaped base 31, arranged two-by-two parallel to said longitudinal direction x, so that each pair of worm screws 5 at a respective base 31 of the pin 3 surrounds said shaped base 31 and may engage it, having shapes which are complementary thereto. In this way, each worm screw 5 rotationally constrains the base 31 of the pin 3, the rotation of the pin 3 being allowed around its longitudinal axis y only if the same screws are put into congruent rotation through an external action. Without this external action, rotation of the worm screws 5 themselves is therefore prevented by the action of the pin 3. Therefore, by imposing congruent rotations on the worm screws 5, these will allow the rotation of the pin 3 in a precise way. Furthermore, by exploiting the principle of the worm screw and toothed wheel, the torque to be applied to the worm screws 5 is much less than the torque that is activated on the pin 3, thus allowing the use of extremely reduced torque setting tools compared to those to be used in the embodiments described above.

By way of example, if a torque of 300Nm is to be applied to the pin 3, it will be sufficient to apply a torque of approximately 10Nm to the single worm screw 5, therefore demultiplied by approximately 30 times.

Advantageously, the worm screws 5 may rotate at the same time by rotating the pin 3, but the worm screws 5 will not rotate for this configuration if the pin 3 wants to rotate, for example because it is stressed by the straps 500 or by any outer torque.

Furthermore, in the embodiment shown in Figures 12A-12G, each shaped base 31 of the pin 3 may be inserted into a respective hole 212 of the body 2 inside which said worm screws 5 protrude, which are housed in respective screw holes 215, each screw hole 215 being adjacent and orthogonal to the hole 212 for housing the shaped base 31. In particular, the hole 212 may be a smooth hole with a greater diameter than the diameter of the base 31 so as to allow the rotation of the base 31 when activated by means of said worm screws.

In alternative embodiments (not shown in the figures), the body 2 may have the solution relating to the two slots 220 but not the solution relating to the worm screws 5, or vice versa.

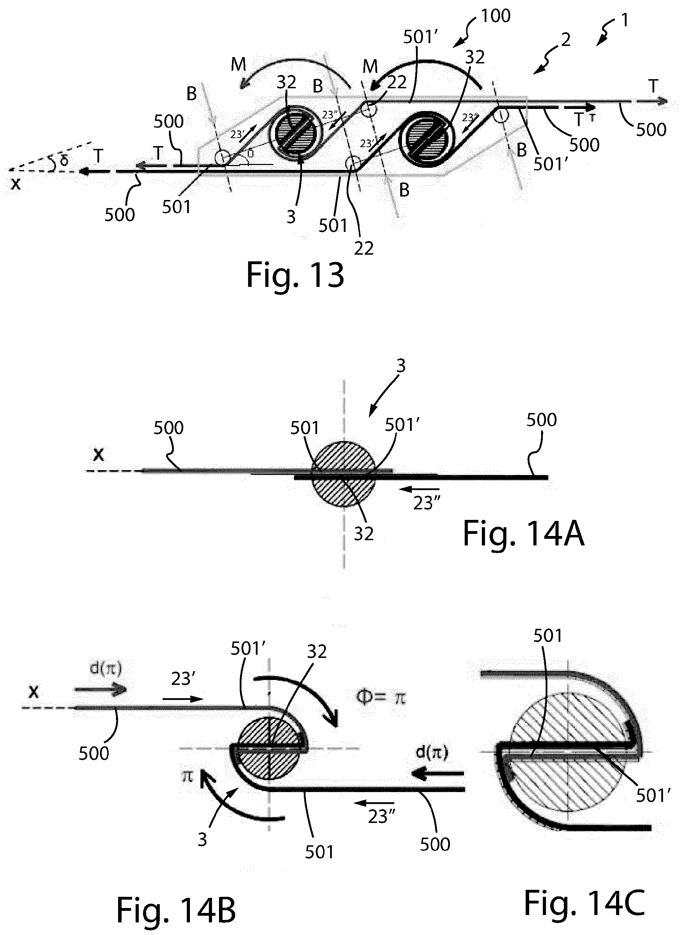

Finally, with particular reference to Figure 13, a further embodiment of a coupling element 100 according to this invention is shown. In particular, this coupling element 100 makes it possible to obtain a pair of coupling systems 1 connected on a single body 2.

The coupling element 100 in this embodiment comprises a single body 2 and two pins 3 having the same characteristics as the pins 3 just described, and two pairs of folding points 22 arranged consecutively to each other, so as to advantageously allow the coupling of two pairs of portions to be coupled 501, 501' of straps 500 with a single device.

Furthermore, the two coupling systems 1 thus obtained interpenetrate each other, since the folding point 22 of a second portion to be coupled 501' of a first strap 500 is arranged after the folding point 22 of a first portion to be coupled 501 of a second strap.

In this way, it is possible to reduce the space occupied by coupling systems 1 for coupling two or more pairs of ends of straps 500 and facilitate the insertion of the ends of straps 500.

In the particular embodiment shown in Figure 13, this interpenetration is obtained by aligning the folding points 22 belonging to each pair parallel to a direction inclined by an angle $\delta$, with respect to said longitudinal axis x of insertion of said portions to be coupled 501, 501', said angle $\delta$ being for example, comprised between 10° and 40°, preferably equal to 20°.

In alternative embodiments not shown in the figures, there may also be more than two of such pins 3.

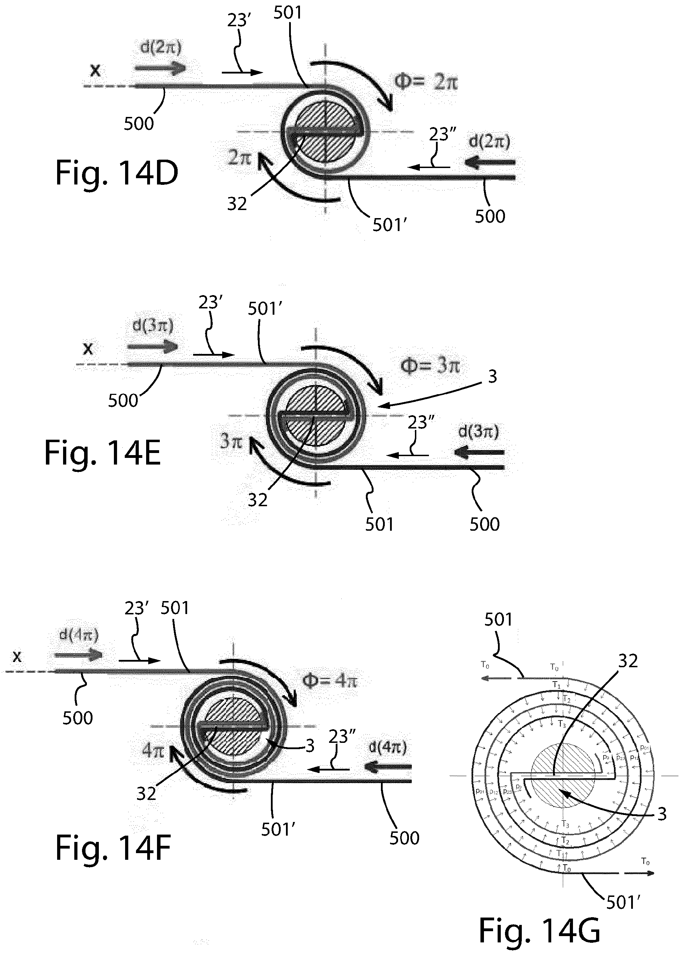

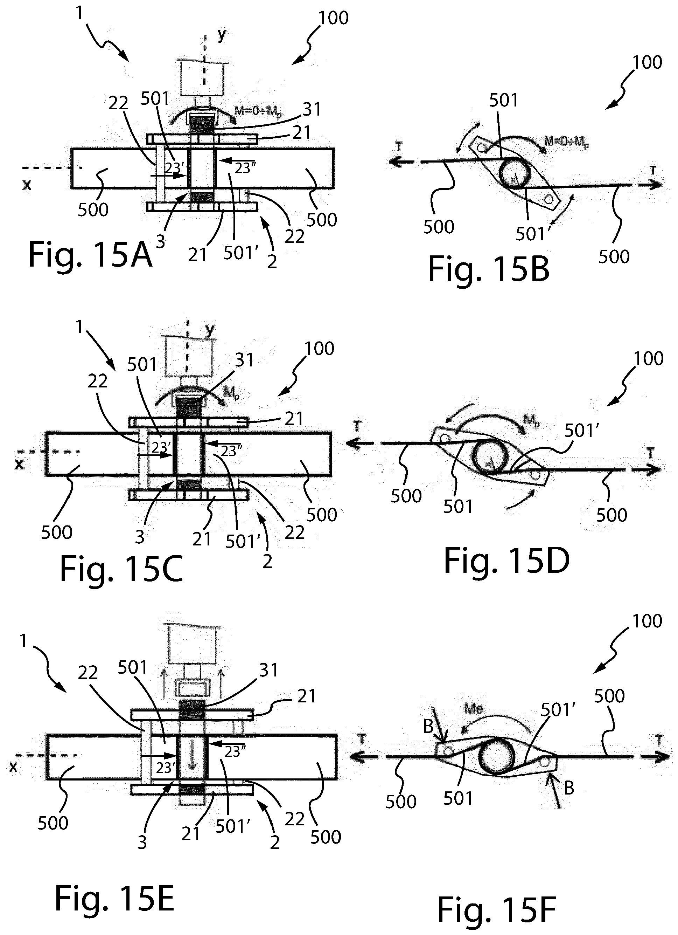

With reference to Figures 14A-14G and 15A-15F, the insertion of the portions to be coupled 501, 501' of straps 500 into the slot 32 of the pin 3 and their consequent locking and tightening takes place according to the following method:

A. inserting a first portion to be coupled 501 of a strap 500 into the housing 32 of the pin 3, through the first side opening 23', making it pass below the respective folding point 22;
B. inserting a second portion to be coupled 501' of a strap 500 into the housing 32 of the pin 3, through the second side opening 23", making it pass above the respective folding point 22;
C. overlapping the portions to be coupled 501, 501' of straps 500 inserted into the housing 32 of the pin 3, making them go beyond the housing 32 itself (as shown in Figure 14A);
D. rotating the pin 3 along a first rotational direction $\phi$ with a first 180° half-turn so as to lock the portions to be coupled 501, 501' of straps 500 on the coupling element 1, this half-turn being necessary to ensure full pulling exploitation of the straps 500 (as shown in Figure 14B);
E. continuing to rotate the pin 3 along said first rotational direction $\Phi$, up to at least 360°, or to the minimum rotation necessary, as better illustrated below, in such a way as to provide resistance to removal and a radial pinching of the pin 3 such as to self-tighten the portions to be coupled 501, 501' of straps 500 (as shown in Figures 14C and 14D);
F. if necessary, continuing to rotate the pin 3 along said first rotational direction $\Phi$ with a further predefined number of winding turns, "winding" the two overlapped ends of straps 500 on themselves and shortening their respective free length in such a way as to pull the straps 500, thus modulating the rotation torque and generating a controlled tensioning (as shown in Figure 14E), the number of turns depending on the length of the portions to be coupled 501, 501' of the straps 500 to be wound and on the type of system; and
G. locking the pin 3 by means of the locking means 4, 42, 420 or 25, 211 or 26, 211.

In this way, a coupling system 100 is formed comprising the coupling element 1 and two portions to be coupled 501, 501' of tightened straps 500 coupled to the coupling element 1. In particular, the two portions to be coupled 501, 501' of straps 500 may belong to the same strap 500 or to different straps 500.

Furthermore, during the first half-turn winding of step D, the two portions to be coupled 501, 501' of straps 500 are folded on the pin 3, locking on themselves with self-tightening mechanical locking which advantageously ensures an ideal mechanical continuity between the portions to be coupled 501, 501' of straps 500. Therefore, the locking action takes place without having to resort to cutting or welding the portions to be coupled 501, 501' of straps 500.

The self-tightening locking advantageously exploits 100% of the mechanical performance of the straps 500 and is guaranteed both by the fact that the portions to be coupled 501, 501' of the straps 500 are overlapped by rotation, and by the folding of these portions to be coupled 501, 501', each acting in conjunction with the portion to be coupled 501', 501 of opposite strap 500, so as to be compressed against the pin 3 and to be locked in position.

In the subsequent winding turns during steps E and F, the portions to be coupled 501, 501' of straps 500 are tensioned and it is possible to tighten said straps 500 to a predetermined strength by suitably calibrating the torque $M_p$ to be applied to the pin 3 for its rotation.

Once the desired tensioning value has been reached, the pin may be mechanically locked, as shown according to the different locking methods described.

The locking mechanism of the portions to be coupled 501, 501' of straps comprises a series of operations which are triggered therein, as shown in Figure 14B, and which concern the plastic capacity of the material forming the strap 500. Furthermore, this locking mechanism depends on the pinching action that subsequent turns exert on the wound portions of straps 500 from the friction that is generated thanks to such pinching, said friction being a function of the material forming the straps 500 (e.g. steel, plastic, carbon fibre, etc.).

As shown in Figure 14C, the first portion to be coupled 501 of the strap 500 which protrudes to the right of the slot 32 is folded around the pin 3 so as to undergo a plastic or elastic deformation according to the thickness of the strap 500. The ratio between the thickness of the strap 500 and the radius of curvature of this fold defines whether elastic or plastic behaviour will occur for this fold.

The edge of a first portion to be coupled 501, 501' coming out of the slot 32 is subsequently "pressed" by the first half-turn of the second portion to be coupled 501', 501 of strap 500 and obliges the first portion to be coupled 501, 501' - should it be pulled to be extracted - to slide below the second portion to be coupled 501', 501, bending according to the radius of the pin 3 and on the much narrower curvature of the fold of the slot 32.

If this fold were to generate a deformation behaviour in the plastic range, the tension applied to the portion to be coupled 501, 501', or pull, should be sufficient to plasticize it in the direction opposite to the one for making it come out. Therefore, hypothesising that this force is greater than the tensile strength of the portion to be coupled 501, 501' of the strap 500, the fold would be sufficient to constrain the portion to be coupled 501, 501' of strap in this position.

However, the section of the portion to be coupled 501, 501' at the fold is stressed by pulling, folding and cutting (while the pin 3 is not shear stressed, as better illustrated below). This section is therefore never able to guarantee 100% resistance of the locking, but can at most carry a fraction between 20% and 60% of this resistance.

On the contrary, if the plastic moment were negligible, i.e. the folding section were to remain in the elastic range (for example, with reduced thicknesses of the portion to be coupled 501, 501' of strap 500 between 0.1-0.2mm), the locking capacity of this fold would be minimal, and possibly negligible.

Therefore, the first fold is able to carry an aliquot of the maximum pull applied to the portion to be coupled 501, 501' of strap 500 that we define $To/T_{min}$, wherein:

$To$ is the ultimate strength of the strap 500 and
$T_{min}$ is the force necessary to remove the first fold.

As anticipated and as better illustrated below, this size depends on the thickness of the strap 500 with respect to the radius of curvature of the pin 3 and on the plastic capacities of the material used for the straps 500.

By way of example

in the case of straps 500 made of steel with thicknesses in the *range of* 0.6 mm-2 mm, the ratio $To/T_{min}$ preferably is less than or equal to 5;
in the case of straps 500 made of plastic materials with thicknesses in the *range of* 0.6 mm-2 mm, the ratio $To/T_{min}$ preferably is less than or equal to 15; and
in the case of straps 500 made of foils/FRP fabrics with thicknesses in the *range of* 0.16 mm-0.6 mm, the ratio $To/T_{min}$ preferably is less than or equal to 30.

As shown in Figures 14B-14G, in addition to the resistance by removal given by the first fold, the contribution of the radial pinching generated by the subsequent turns intervenes.

The principle of the rope is applied, whereby the single portion to be coupled 501, 501' wound under tension onto the pin 3 exchanges a radial compression action ($p_{ij}$) with the lower portions to be coupled 501', 501, which generate an increasing compression on the innermost portions of straps 500 of the spool being formed, as shown in Figure 13G.

There is also an exchange by friction between the individual portions to be coupled 501, 501', which has a circumferential component and which is a function of the material of the straps 500.

Therefore, the pull on the outermost portion to be coupled 501, 501' *To* is decreased inside the windings precisely thanks to this exchange by friction which, among other things, benefits from an increasing compression action.

The equations that allow to calculate both the pressures and the pull value in the internal branches may be easily obtained.

The basic formula of the rope defines the tension applied on a rope wound by an angle α, starting from the tension of the outermost edge, through the function:

$$T = To \cdot \exp(-\mu \cdot \alpha),$$

where:

α is the rotation angle of the rope;
*T* is the tension value of the inner edge of the rope wound by an angle α;
*To* is the tension value of the outer edge of the rope; and
μ is the value of the friction coefficient of the material with which said rope is made.

In the particular case of the coupling element the object of this invention, it generates a similar effect on the portions to be coupled 501, 501' of strap 500, which however must preferably also take into account the increasing pinching for coupled portions 501, 501' of straps 500 which are further inside the formed spool.

A possible formulation of the relationship between *To* and *T* for a strap 500 with coupled portions 501, 501' in the coupling element 1 that takes into account this pinching, is given by the equation:

$$T = (To - p_{oi}R_{i+1}) \exp(-\mu \cdot \alpha) + p_{oi}R_{i+1},$$

where
$p_{oi}$ is the pinching pressure exerted on said coupled portions 501, 501' of straps 500 and $R_{i+1}$ is the total radius of the formed spool, which in turn depends on the thickness of the strap 500.

This formulation therefore makes it possible to know the state of tension of the straps 500 at each turn or winding half-turn.

In particular, this formulation makes it possible to calculate how many half-turns are necessary to constrain the strap and arrive at the end fold with a pulling value lower than a predetermined one $T_{min}$.

As seen, this relationship also depends on the friction coefficient μ, which:

in the case of stainless steel straps 500, is usually equal to μ = 0.50,
in the case of straps 500 made of structural plastics, the friction coefficient μ is usually between 0.25 and 0.40;
in the case of straps made of carbon fibre sheets (CFRP), the friction coefficient μ is usually between 0.15-0.25; and
in the case of straps 500 made with fabrics containing carbon fibres (CFRP), the friction coefficient μ is usually between 0.05 - 0.15.

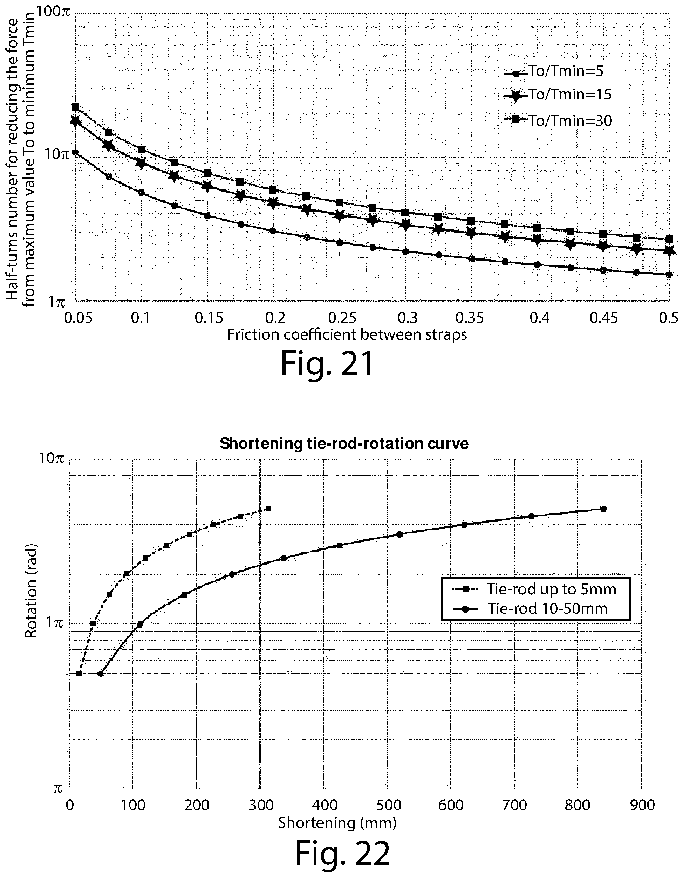

The graph of Figure 21 shows by way of example, three curves obtained starting from the reduction ratio for steel ($To/T_{min}$ = 5), structural plastics ($To/T_{min}$ = 15) and carbon fibres ($To/T_{min}$ = 30). These curves show the rotation value (expressed in radians) of the pin 3 necessary to reach the desired ratio between the maximum tensioning applied to the strap 500 and the force necessary to remove the strap 500 from the first fold, with respect to the friction coefficient between the coupled portions 501, 501' of strap 500, according to different desired ratios $To/T_{min}$.

For the given example, 1.5 half-turns are sufficient for locking said portions to be coupled 501, 501' in the case of steel straps 500.

Similarly, between 2 and 4 half-turns are required in the case for example, of straps 500 made with structural plastics, while between 5 and 10 half-turns are required for straps 500 made of carbon fabrics/foils.

It is evident that steel is the most effective material, but materials with carbon fibres produced in foils or resin-coated fabrics that have higher friction values than their dry counterparts can also be used.

In summary, use with all the illustrated materials is reasonable, but the number of turns required for locking must be defined differently for each of them.

Carbon fibre materials having a greater resistance than steel may be advantageously used for large-sized artefacts as they may have a smaller thickness, while structural plastics may be advantageously used for local interventions on small elements such as for example, in anti-overturning applications for infills.

The coupling element 1, also called locking element 1, just described may be used in all its variants for coupling two respective ends of at least one tie rod used to bind a building element, for example a reinforced concrete element or a masonry element or a bridge beam, and for the consequent creation of a building artefact, in particular a masonry artefact comprising the locking element 1 and the building element.

This masonry artefact may be obtained for example, by binding and/or winding at least one building element with said at least one tie rod, for example by using the binding method described in Italian Patent No. 101999900805279, and locking the ends 501, 501' of said at least one tie rod 500 with said locking element 1.In summary, in addition to locking two portions to be coupled 501, 501' of the strap, the locking element 1 generates a shortening of the straps 500 by winding, which ultimately results in their tensioning, it all being strictly dependent on the length of the tie rod to be made.

In particular, the pressures $p_{ij}$ depend on the value of the pull applied to the straps 500. Once the pin 3 has been made to rotate when zero backlash is reached, the further rotations elastically shorten the straps 500 and the tensional state which derives from this is dependent on the length of the straps 500 themselves, rotation being equal.

By way of example, a rotation of one degree generates a winding, and therefore a shortening, of the strap 500

$$dl = 2 * R \cdot 1° \cdot \frac{\pi}{180°}$$

equal to . Each portion to be coupled 501, 501' of strap 500 is shortened by the quantity

$$R \cdot 1° \cdot \frac{\pi}{180°}$$

and both portions to be coupled 501, 501' are shortened in the winding, therefore the whole strap 500 is shortened by a value which is twice this value, precisely equal to *dl.*

The tension on the strap 500 is given by the deformation of the strap itself, which depends on its initial length. In particular, the tension $T = E * dl/lo,$ where *E* is Young's modulus of the strap 500, *lo* is its resting length and *dl* is its shortening.

The tension is therefore inversely proportional to the initial length of the strap 500.

It should be noted that if the straps 500 are very short, as in the case of straps 500 having a length between 1m and 2m, for example to be used for the confinement of pillars and beams made of reinforced concrete, the shortening necessary for tensioning is equal to a few millimetres, therefore between one tenth and one twentieth of a turn of pin 3 may be sufficient to tighten the straps 500.

On the contrary, in the case of applications for bridges, these tie rods may have a length between 10 and 50m; in this case, the rotations of the pin 3 necessary for their tightening is between two and four turns, since the length of the tie rods must be shortened between 5 cm and 40 cm.

The size of the body 2 is also different in relation to the size of the straps 500 to be tensioned. By way of example, a coupling system for buildings may comprise a body 2 having dimensions of approximately 6 cm x 4 cm, while a coupling system for viaducts may comprise a body 2 having dimensions equal to approximately 20 cm x 12 cm.

The pull actually applied can be calculated through the ratio between the torque *Mp* applied to the pin 3 and the diameter $2R_1$ of the spool thus generated (i.e. the total diameter of the pin 3 plus the thickness of the wound straps 500).

Thanks to the winding on the pin 3 of the portions to be coupled 501, 501' of the straps 500, the coupling element 1 generates an advantageous shortening and tensioning of the straps 500, which is a function of the length of the tie rod to be made.

Therefore, in the first step of installing the tie rod, it has an increased length of the strap 500 to allow its positioning in the slot 32 of the pin 3, this increase being able to be between 100 mm (in the case of tie rod up to 1 m) and 500-800 mm, for example to be used in the case of tie rods for application on bridges, and therefore having lengths between 10 and 50 m.

Once the two portions to be coupled 501, 501' are positioned in the pin 3, it is made to rotate to wind this increased length with respect to the coupling element 1 itself, and eliminate any backlash.

As already described for building applications (reinforced concrete beams and pillars, masonry structures for common tie-rod systems), the coupling element 1 preferably has a minimum dimension, with pin 3 having a diameter of 12 mm, while the pin 3 preferably has a diameter of 36 mm for applications on large infrastructures, such as bridges and viaducts, and therefore with a tie rod having a length between 10 m and 50 m.

The graph of Figure 22 is an example of the number of winding half-turns of the straps 500 with respect to the pin 3 necessary to cancel the backlashes for the two types of tie rods, depending on the total length of the strap 500 and its type.

Once these backlashes have been eliminated, the coupling element 1 is used to apply the tie-rod tensioning.

The tensioning level is therefore a function of the number of turns applied to the pin 3 and of the final length of the strap 500 or tie rod, this number of turns generating a different tensioning level.

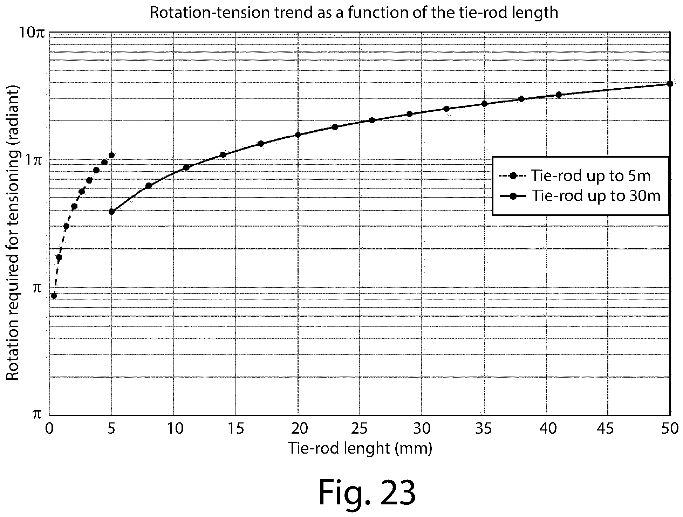

The number of half-turns necessary for correct tensioning may be calculated also in this case. By way of example, the graph of Figure 23 shows the curves that provide the number of turns for the two types of tie rods previously defined. The graph of Figure 23 shows the rotation value of the pin 3 (expressed in radians) necessary to bring the strap 500 to the desired tightening as a function of the length of the strap 500 itself and its type.

It is therefore evident from the graphs of Figures 21-23 that it is possible to obtain the desired shortening and tensioning of the straps 500 with a relatively small number of rotations.

Advantageously, in some of its described embodiments, the coupling system allows being released and carrying out a further tightening of the straps 500, for example to check the tensioning state over time and/or to make subsequent modifications to this tensioning state.

Furthermore, the tightened winding of the straps 500 advantageously generates a radial compression action (pinching) on the wound ends in the pin 3 and on the pin 3 itself. This improves and makes the tightening capacity proportional to the pull, which increases as the applied tightening force increases.

By way of example, the tightening torque may be applied to the pin 3 by means of a drill or screwdriver with adjustable torque (both electric or pneumatic), such as the drills or screwdrivers commonly present on the market with various and coded performance suitably modified to be connected to the pin 3. If a torque between 30 Nm and 300 Nm is to be applied to the straps 500, for example drills and/or screwdrivers pre-certified in the factory with applicable torques with a precision of 0.1 Nm may be used, or the torque to be applied to the screws in the case of the embodiment of the coupling system 1 illustrated in Figures 12A-12G is only 10 Nm, compared to a torque on the pin equal to 300 Nm.

Advantageously, since both portions to be coupled 501, 501' of the straps 500 are connected to a single pin 3, there are no cutting actions stressing the pin 3, as is the case in prior art coupling systems, since, as seen, the pin 3 is stressed by balanced actions free from friction which would alter the state of tension applied to the straps 500 themselves.

Therefore, advantageously in this configuration of the locking element 1, the pin 3, which is the only binding body of the two strap ends 501, 501', is never stressed or cut or folded, either before locking and after locking, thus constraining said two strap ends 501, 501' subjected to identical tension and therefore to a zero result.

Furthermore, said pin 3 is the only binding body of the two strap ends 501, 501', both before locking and after locking; it can be advantageously stressed only by torsion, thus constraining said two strap ends 501, 501' subjected to identical and eccentric tension with the generation of a torque around the axis of the pin 3 itself.

The pin 3 is advantageously stressed by an overall zero horizontal action, and consequently any effect due to friction is zero. Therefore at least in principle, this coupling system has the advantage of being able to lock and tighten straps 500 even without external contrasts, i.e. also in the air. Moreover, thanks to the fact that the pin is not shear stressed and rotational friction stressed, it is advantageously possible to produce it with small dimensions, if compared to the dimensions usually used in the coupling systems of the known art, straps to be tensioned being equal.

It should be noted that without the folding points 22, the locking of the pin 3 by means of the locking means 4, 42, 420 or 25, 211 or 26, 211 might not be sufficient to prevent the unwinding of the straps 500 locked in position, since once the pin 3 is locked in position, it is integral with the body 2 and the body 2 is still free to rotate around the locked straps 500, as shown in Figure 15B (wherein the portions to be coupled 501, 501' are not folded at the folding points 22), thus unwinding them.

In this context, the passage of the portions to be coupled 501, 501' of straps 500 on the folding points 22, through the side openings 23', 23", in such a way as to be parallel, not aligned, with respect to a longitudinal direction x, allows advantageously to generate two return forces *B* adapted to balance the torque *M* applied.

The process is as follows: by rotating the pin 3, the straps are pulled, while the body 2 is free to rotate around the pin 3. Once the desired pulling has been achieved, the body 2 is positioned in such a way as to contrast with the straps by means of the folding points 22.

In particular, with reference to Figures 15C-15D, before activating the locking of the pin 3, the body 2 is positioned so as to put the folding points 22 in touch with the straps 500.

Subsequently, the pin 3 is locked on the body 2 by means of the locking means 4, 42, 420 or 25, 211 or 26, 211.

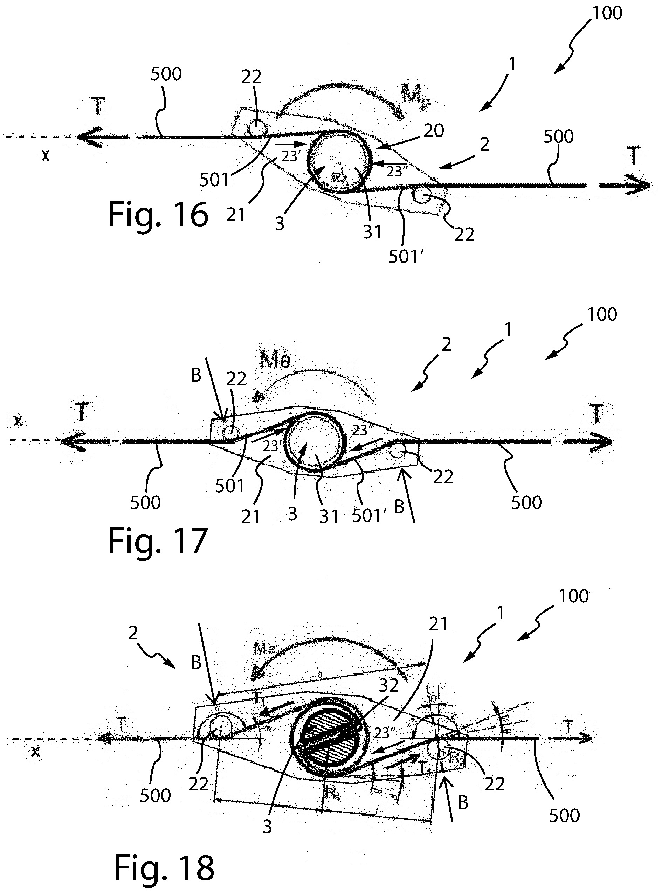

Therefore, once the straps 500 have been tensioned and the pin 3 has been locked on the body 2, the same body 2 tends to rotate by applying a force on the straps 500 through said folding points 22, until a static equilibrium to rotation is reached, as shown in Figure 15F and in Figures 17-19.

Naturally, this behaviour is purely theoretical since the coupling system in all conditions and in all variants is tightened and at the same time rotated to contrast said folding points 22, thus avoiding any further movement subsequent to its locking.

In particular, once the pin 3 is locked in position, the forces B shown in Figures 17-19 are generated on the folding points 22, which in turn generate a return torque, equal

$$B \cdot d,$$

equal and opposite to the overall torque *Me*, thus stressing the body 2.

The torque $M_e$ is given by the torque imparted on the pin in the tightening $M_p$ which, after the locking, is equal to the pull of the straps for the distance between the axes of the two, equal to $2 \cdot R_1$.

The return forces are therefore generated automatically, as soon as the pin is locked on the body 2 with the straps under tension.

The pulling of the straps will apply a momentum $M_p = T_1 \cdot 2R_1$ on the pin 3, which is integral with the body 2, the latter being made to rotate on itself.

However, having advantageously passed the ends of the straps, above and below the folding points 22, respectively, through side passageways 23' and 23" so as to be arranged in a parallel but not aligned manner, the same portions to be coupled 501, 501' of 500 straps act in conjunction until the torque $M_e = M_p$ is balanced through the exchange of actions $B = M_e/d$ (as shown in Figures 16-19).

Therefore, advantageously, the locking to rotation of the body 2 is carried out at said folding points 22 due to the contrast generated with the two ends 501, 501' of straps passing, one below and the other above said folding points 22.

In this way, the coupling element 1 does not need to be coupled to an external contrasting element that prevents its rotation, thus facilitating the coupling of ends of straps 500 and also significantly reducing the application times of the coupling element itself.

In alternative embodiments, the portions to be coupled 501, 501' can be inserted into the housing 32 of the pin 3 with different paths from those shown in the figures, however the relative position of the portions to be coupled 501, 501' must in any case be configured to generate a pair of return forces $B$, such as to apply an equal and opposite reaction to the torque $Me$ exerted by the winding of the pin 3 on the straps 500 themselves.

In this way, once the pin 3 has been rotated along said first rotational direction $\Phi$ and then locked in position by the locking means 4, 42, 420 or 25, 211 or 26, 211, it is avoided for the body 2 to rotate around the transversal axis y of the pin 3 in the direction opposite to said first rotational direction $\Phi$ and free the portions to be coupled 501, 501' of wound straps 500.

With particular reference to Figures 17-19, the forces applied on the body 2 are analysed in detail.

The straps are initially inserted along the longitudinal direction x, therefore the angle between the axis joining the side elements 22 and the sections of the portions to be coupled 501, 501' inserted into said side openings 23, 23', and the angle between the axis x and the same sections of the portions to be coupled 501, 501', respectively, are called $\beta$ and $\beta'$.

The angle of inclination of the strap 500 with respect to the longitudinal direction x, at each side element 22, is also defined by $\alpha$. In particular, the angle $\alpha$ is equal to

$$\alpha \,=\, \pi - \beta'.$$

The angle $\theta$, with respect to which the relationship between the reaction $B$ and the pull of the straps $T = T_1$ is calculated, is equal to:

$$\theta \,=\, \beta'/2 \,=\, \pi/2 - \alpha/2.$$

The angle $\gamma$, which is the direction of the reaction torques $B$ with respect to the longitudinal direction x of the strap, is equal to

$$\gamma \,=\, \alpha/2.$$

After having wound the pin 3 by applying a torque $M_p$, the pull $T$ applied to each portion to be coupled 501, 501' of strap 500 is only a function of the diameter $2R1$ of the spool, being equal to:

$$T \,=\, M_p/2R_1 \,.$$

The traction $T_1$ applied to each portion to be coupled 501, 501' of strap 500, which goes from the pin 3 to the respective side element 22, is also equal to $T$, i.e. $T_1 = T$.

The forces $B$, which act on the strap 500 at its folding on the respective side element, along the direction defined by the angle $\gamma$, have an intensity equal to:

$$B = 2 T_1 \operatorname{sen}(\theta),$$

Calling l the length measured along the axis joining each side element 22 to the pin 3, the total distance between said two side elements 22 is equal to 2*l*.

The angle $\delta$, inclination angle of the body 2 with respect to the longitudinal direction x, is equal to:

$$\delta = \operatorname{arcsen}(R_{22}/l),$$

where $R_{22}$ is the radius of the side elements 22 having a cylindrical shape.

The projection *d* of the total distance 2*l* along the direction defined by the angle $\theta$ is equal to:

$$d = 2 l \cos(\theta + \delta)$$

Therefore, the torque $M_e$ exerted by the two reaction torques *B* is equal to:

$$Me = B \cdot d = 4 l T_1 \cos(\theta + \delta) \cdot \operatorname{sen}(\theta)$$

where *B* and *d* are the reaction torque and distance vectors, respectively, along the orthogonal to *B* between side elements 22.

After the locking to rotation, the body 2 then contrasts with the portions to be coupled 501, 501' of the straps 500, thus activating the reactions *B*.

It should be noted that the reactions *B* exist only after the straps 500 have been tightened and the pin 3 locked to rotation, by said locking means 4, 42, 420 or 25, 211 or 26, 211. Furthermore, even when the coupling system is subjected to such reaction torques *B*, the relationship between *T* and $M_p$, which is not affected by any frictional action, continues to be valid.

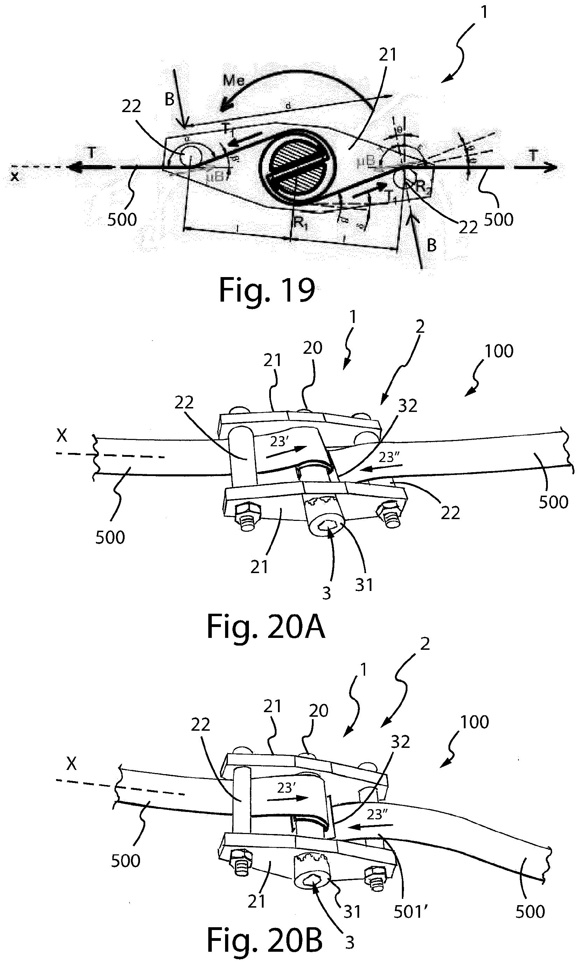

These reactions *B*, acting on the side elements 22, could activate friction reactions, as illustrated in Figure 19, but such friction does not alter the pulling state *T* on the strap 500. Furthermore, this friction advantageously contributes to reducing the torque $M_p$ exerted on the pin 3, reducing the value of $T_1$, and improving the tightening capacity of the coupling system.

For example, with particular reference to Figure 19, assuming that after the strap is locked, its pull is increased by a value equal to $\Delta T$, we would have:

$$\Delta T1 = \Delta T - \mu B \cos(\theta).$$

Therefore, in the case where: $R_1$ = 7mm, $R_{22}$ = 3mm, *l* = 20mm, $\beta$ = 30°, $\beta'$ = 21.4°, $\delta$ = 8.6° $\alpha$ = 158.6°, $\theta$ = 10.7°, $\gamma$ = 79.3°, the reaction *B* is equal to:

$$B = 2T_1 \cdot \operatorname{sen}(\theta);$$

and consequently, in the case of friction, with the previous values:

$$\Delta T_1 = \Delta T - \mu \cdot (T_1 + \Delta T1) \cdot \operatorname{sen}(2\theta).$$

If the friction coefficient $\mu$ has values between $\mu$ = 0.3-1, the action exerted on pin 3, generated by the pull T1, does not increase if the variation of the tension value *T* is between 10% and 35%, respectively, of the initial value.

Thanks to this configuration, the friction force does not negatively alter the operation, rather produces both an improvement in locking and a reduction in the actions that would be generated on the body of the tensioner.

Figures 20A and 20B show a coupling system 1 according to this invention, subjected to a tensile test.

In particular, Figure 20B shows that the breaking of the coupled straps 500 occurs outside the body 2, which confirms that the coupling system 1 according to this invention allows to exploit the straps 500 themselves 100%, and to obtain an optimal closing performance.

In summary, the coupling element 1 may be used in a coupling method for coupling two portions to be coupled 501, 501' of strap 500 (or other tie rod), comprising the following steps:

> A. inserting a first portion to be coupled 501 into the slot 32 of the pin 3, through a first side opening 23';
> A. inserting a second portion to be coupled 501' into the slot 32 of the pin 3, through a second side opening 23", opposite to the first;
> C. overlapping said portions to be coupled 501, 501' at said slot 32;
> D. rotating said pin 3 around its axis along a first rotational direction φ by at least a first half-turn; and
> E. locking the pin 3 on the body 2 of the coupling element by means of suitable locking means present on the body 2 or which may be coupled to it, so as to prevent its rotation around the axis y.

In particular, during said step D, the pin 3 may be rotated by a number of turns such as to shorten the portions to be coupled 501, 501' by a predetermined length *dl* and impose a predetermined tension *T,* and the number of turns of the pin 3 may be calculated as a function of the radius R1 of the pin 3 itself, the initial length *do* of the portions to be coupled 501, 501' and the total thickness of the strap 500.

Furthermore, in calculating the number of turns, the material of the straps 500 and the final length of the strap 500 may also be taken into account, once said portions to be coupled 501, 501' have been coupled.

Furthermore, during said step C, each portion to be coupled 501, 501' may be arranged in such a way as to partially protrude from the slot 32 of the pin 3 in the direction opposite to the respective side opening 23', 23" so as to strengthen the binding of said portions to be coupled 501, 501'.

The method just described can further comprise the following step:

F. manually or automatically putting each portion to be coupled 501, 501' in touch with a folding point 22 of said body 2 and folding said portion to be coupled 501, 501' at said folding point 22 in such a way as to reach a stable equilibrium and prevent the rotation of the body 2 on itself.

Finally, the pin 3 may be made to rotate during said step D by the action of a drill or screwdriver with adjustable torque, or by said worm screws 5.

The preferred embodiments have been described above and variants to the invention have been suggested, but it shall be understood that the invention may be modified and/or adapted by experts in the field without thereby departing from the scope of the inventive concept, as defined in the claims herein.


## Claims

1. Coupling element (1) for coupling two portions to be coupled (501, 501') of at least one tie rod (500), said coupling element (1) comprising:

   a body (2) comprising two opposite side openings (23', 23") for the passage of a respective portion to be coupled (501, 501') of said at least one tie rod (500), said openings being arranged along a first longitudinal axis (x),
   a pin (3) arranged along a second transversal axis (y) substantially perpendicular to said first longitudinal axis (x), said pin (3) comprising at least one slot (32) adapted to insert said portions to be coupled (501, 501'), said pin (3) being arranged between said side openings (23', 23") and being coupled to the body (2) in a rotatable manner so as to be able to rotate on itself around said second transversal axis (y), and
   locking means (5) for locking said pin (3) on said body (2) so as to prevent its rotation on said second transversal axis (y) along at least one rotational direction,

   wherein

   said pin (3) comprises at least a shaped base (31),
   said coupling element (1) being **characterised in that** said locking means (5) comprise at least a pair of worm screws (5) arranged on said body (2) along a direction parallel to said longitudinal axis (x) and surrounding said shaped base (31),
   said worm screws (5) having a complementary contour to the toothing of said base of said pin (3) and configured in such a way that during use, rotation of said shaped base (31) is allowed only when an outer torque is applied to said worm screws (5) along a predetermined rotational direction (φ), placing them in rotation, and in such a way as to prevent their inverse rotation in the direction opposite to said predetermined direction (φ) so that during use, when said portions to be coupled (501, 501') are inserted into said slot (32) and overlapped one another after passing through a respective side opening (23', 23"), said portions to be coupled (501, 501') are coupled together by rotating said pin (3) on said second transversal axis (y) and subsequent locking by said worm screws (5).

2. Coupling element (1) according to claim 1, **characterised in that** said body (2) comprises a central portion (20) coupled to said pin (3) and two folding points (22) arranged laterally to said central portion (20) for folding said portions to be coupled (501, 501'), said side openings (23', 23") being arranged between a respective folding point (22) and said central portion (20).

3. Coupling element (1) according to claim 2, **characterised in that** said folding points (22) are two side elements (22), preferably cylindrical in shape, arranged parallel to said second transversal axis (y), said body (2) comprising two opposite plates (21) extending on planes parallel to a plane orthogonal to said second transversal axis (y) and joined by said two side elements (22) and by said pin (3) so that the spaces delimited by said plates (21), by said pin (3) and by said side elements (22) form said side openings (23', 23").

4. Coupling element (1) according to claim 2 or 3, **characterised in that** said folding points (22) are the upper or lower edges of two slots (220) obtained in said body (2) along said longitudinal axis (y).

5. Coupling element (1) according to any one of the preceding claims, **characterised in that** said pin (3) has a substantially cylindrical shape, the axis of said substantially cylindrical shape being arranged along said second transversal axis (y), said slot (32) being centrally arranged in said cylindrical shape.

6. Coupling element (1) according to any one of the preceding claims, **characterised in that** it comprises at least two pins (3) for coupling at least two pairs of portions to be coupled (501, 501') of tie rods (500).

7. Coupling system (100), **characterised in that** it comprises a coupling element (1) according to any one of the preceding claims and at least one tie rod (500) comprising two portions to be coupled (501, 501'), each of said portions to be coupled (501, 501') passing through a respective side opening (23', 23") of said body (2) and being inserted into said at least one slot (32), said portions to be coupled (501, 501') being overlapped one another at said slot (32).

8. Coupling system (100) according to claim 7, **characterised in that** said portions to be coupled (501, 501') of said at least one tie rod (500) are coupled together, being wound around said pin (3) so that said portions to be coupled (501, 501') are coupled together without shear stresses on said pin (3).

9. Coupling system (100) according to either of claims 7 or 8 when dependent on claim 2, **characterised in that** a first portion to be coupled (501) of said at least one tie rod (500) is folded at a first folding point (22) of said body (2), touching at least below it, and **in that** a second portion to be coupled (501') of said at least one tie rod (500) is folded at a second folding point (22) of said body (2), touching at least above it, so as to ensure the locking at the rotation of said body (2) due to the contrast generated between each portion to be coupled (501, 501') and the respective folding point (22).

10. Coupling system (100) according to any one of claims 7-9, **characterised in that** said tie rods (500) are straps (500) made of metallic material, structural plastics or carbon fibres.

11. Coupling method for coupling two ends of at least one tie rod (500) by means of a coupling element (1) according to any one of claims 1-6, **characterised in that** it comprises the following steps:

    A. inserting a first portion to be coupled (501) of said at least one tie rod (500) into said slot (32) of said pin (3), through a first side opening (23');
    B. inserting a second portion to be coupled (501') of said at least one tie rod (500) into said slot (32) of said pin (3), through a second side opening (23"), opposite to the first one;
    C. overlapping said portions to be coupled (501, 501') of said at least one tie rod (500) at said slot (32) of said pin (3);
    D. rotating said pin (3) around said second transversal axis (y) along a first rotational direction (Φ) by at least a first half-turn by means of the rotation of said worm screws (5); and
    E. locking said pin (3) on said body (2) by means of said worm screws (5) so as to prevent its rotation around said second transversal axis (y).

12. Method according to claim 11, **characterised in that** during said step D, said pin (3) is rotated by a number of turns such as to shorten said portions to be coupled (501, 501') of said at least one tie rod (500) by a predetermined length and impose a predetermined tension.

13. Method according to claim 12, **characterised in that** said number of turns of said pin (3) is a function of the length (R1) of said pin (3) along said first longitudinal axis (x), of the length (d) of said portions to be coupled (501, 501') along said first longitudinal axis (x) and the thickness of said tie rods (500).

14. Method according to the preceding claim, **characterised in that** said number of rotations is calculated as a function of the material of said at least one tie rod (500) and the final length of said at least one tie rod (500).

15. Method according to any one of claims 11-14, **characterised in that** during said step C, each portion to be coupled (501, 501') of said at least one tie rod (500) is arranged in such a way as to partially protrude from said slot (32) of said pin (3) in the direction opposite to the respective side opening (23', 23").

16. Method according to any one of claims 11-15, **characterised in that** said pin (3) is made to rotate during said step D by the action of a drill or screwdriver with adjustable torque.

17. Building artefact, **characterised in that** it comprises at least one building element tied with a coupling system (100) according to any one of claims 7-10.

18. Building artefact according to the preceding claim, **characterised in that** it is obtained by tying and/or winding at least one building element with said at least one tie rod (500) and carrying out a method according to any one of claims 11-17 for coupling the portions to be coupled (501, 501') of said at least one tie rod (500).

19. Building artefact according to claim 17 or 18, **characterised in that** said building element is a reinforced concrete element or a masonry element or a bridge beam.


## Patentansprüche

1. Kopplungselement (1) zum Koppeln zweier zu koppelnder Abschnitte (501, 501') mindestens einer Zugstange (500), wobei das besagte Kopplungselement (1) umfasst: Einen Körper (2), der zwei gegenüberliegende Seitenöffnungen (23', 23") zum Durchführen eines jeweiligen zu koppelnden Abschnitts (501, 501') der besagten mindestens einen Zugstange (500) umfasst, wobei die besagten Öffnungen entlang einer ersten Längsachse (x) angeordnet sind, und ein Stift (3), angeordnet entlang einer zweiten Querachse (y), die im Wesentlichen senkrecht zu der besagten ersten Längsachse (x) verläuft, wobei der besagte Stift (3) mindestens einen Schlitz (32) umfasst, der angepasst ist, um die besagten zu koppelnden Abschnitte (501, 501') einzufügen, wobei der besagte Stift (3) zwischen den besagten Seitenöffnungen (23', 23") angeordnet und drehbar mit dem besagten Körper (2) gekoppelt ist, um sich um sich selbst um die besagte zweite Querachse (y) drehen zu können, und Verriegelungsmittel (5) für das Verriegeln des besagten Stifts (3) an dem besagten Körper (2), um seine Drehung um die zweite Querachse (y) entlang mindestens einer Drehrichtung zu verhindern, wobei der besagte Stift (3) mindestens eine geformte Basis (31) umfasst, und das besagte Kopplungselement (1) **dadurch gekennzeichnet ist, dass** die besagten Verriegelungsmittel (5) mindestens ein Paar Madenschrauben (5) umfassen, die an dem besagten Körper (2) entlang einer Richtung parallel zu der besagten Längsachse (x) angeordnet sind und die besagte geformte Basis (31) umgeben, wobei die besagten Madenschrauben (5) eine zu der Verzahnung der Basis des besagten Stifts (3) passende Kontur haben und so konfiguriert sind, dass während des Gebrauchs eine Drehung der besagten geformten Basis (31) nur dann erfolgt, wenn ein äußeres Drehmoment auf die besagten Madenschrauben (5) entlang einer vorbestimmten Drehrichtung ($\Phi$) aufgebracht wird, wodurch sie in Drehung versetzt werden, und zwar so, dass eine Drehung entgegen der vorbestimmten Richtung ($\Phi$) verhindert wird, so dass während des Gebrauchs, wenn die besagten zu koppelnden Abschnitte (501, 501') in den besagten Schlitz (32) eingeführt werden und einander überlappen, nachdem sie durch eine jeweilige Seitenöffnung (23', 23") hindurchgegangen sind, die besagten zu koppelnden Abschnitte (501, 501') miteinander gekoppelt werden, indem der besagte Stift (3) auf der besagten zweiten Querachse (y) gedreht wird, und anschließender Verriegelung durch die besagten Madenschrauben (5).

2. Kopplungselement (1) nach Anspruch 1, **dadurch gekennzeichnet, dass** der besagte Körper (2) einen mit dem besagten Stift (3) gekoppelten Mittelabschnitt (20) und zwei seitlich zum besagten Mittelabschnitt (20) angeordnete Knickpunkte (22) aufweist, wobei die besagten zu koppelnden Abschnitte (501,501') und die Seitenöffnungen (23', 23") zwischen einem jeweiligen Knickpunkt (22) und dem Mittelabschnitt (20) angeordnet sind.

3. Kopplungselement (1) nach Anspruch 2, **dadurch gekennzeichnet, dass** die besagten Knickpunkte (22) zwei Seitenelemente (22) sind, vorzugsweise von zylindrischer Form, die parallel zu der besagten zweiten Querachse (y) angeordnet sind, wobei der besagte Körper (2) zwei gegenüberliegende Platten (21) umfasst, die sich auf Ebenen parallel zu einer Ebene erstrecken, die orthogonal zu der besagten zweiten Querachse (y) verläuft und durch die besagten zwei Seitenelemente (22) und den besagten Stift (3) verbunden sind, so dass die Räume durch die besagten Platten (21), durch den besagten Stift (3) und die besagten Seitenelemente (22) abgegrenzt sind und die besagten Seitenöffnungen (23', 23") bilden.

4. Verbindungselement (1) nach Anspruch 2 oder 3, **dadurch gekennzeichnet, dass** die besagten Knickpunkte (22) die oberen oder unteren Ränder von zwei Schlitzen (220) darstellen, die in dem besagten Körper (2) entlang der besagten Längsachse (y) vorhanden sind.

5. Kopplungselement (1) nach einem der vorhergehenden Ansprüche, **dadurch gekennzeichnet, dass** der besagte Stift (3) eine im Wesentlichen zylindrische Form hat, wobei die Achse der besagten im Wesentlichen zylindrischen Form entlang der besagten zweiten Querachse (y) angeordnet und der besagte Schlitz (32) zentral in der besagten zylindrischen Form angeordnet ist.

6. Kopplungselement (1) nach einem der vorhergehenden Ansprüche, **dadurch gekennzeichnet, dass** es mindestens zwei Stifte (3) zum Koppeln von mindestens zwei Paaren von zu koppelnden Abschnitten (501, 501') von Zugstangen (500) umfasst.

7. Kopplungssystem (100), **dadurch gekennzeichnet, dass** es ein Kopplungselement (1) nach einem der vorhergehenden Ansprüche und mindestens eine Zugstange (500) umfasst, die jeweils zwei zu koppelnde Abschnitte (501, 501') umfasst, wobei die besagten zu koppelnden Abschnitte (501,501') durch eine jeweilige Seitenöffnung (23', 23") des besagten Körpers (2) hindurchgehen und in den jeweiligen besagten mindestens einen Schlitz (32) eingeführt werden, wobei die zu besagten zu verbindenden Abschnitte (501,501') an dem besagten Schlitz (32) einander überlappen.

8. Kopplungssystem (100) nach Anspruch 7, **dadurch gekennzeichnet, dass** die zu koppelnden Abschnitte (501, 501') der besagten mindestens einen Zugstange (500) miteinander gekoppelt sind, wobei sie um den besagten Stift (3) gewunden sind, so dass die besagten zu koppelnden Abschnitten (501,501') ohne Scherspannungen an dem besagten Stift (3) miteinander gekoppelt sind.

9. Kopplungssystem (100) nach einem der Ansprüche 7 oder 8, wenn abhängig von Anspruch 2, **dadurch gekennzeichnet, dass** ein erster zu koppelnder Abschnitt (501) der besagten mindestens einen Zugstange (500) an einem ersten Knickpunkt (22) des besagten Körpers (2) geknickt ist, zumindest darunter berührend, und dass ein zweiter zu koppelnder Abschnitt (501') der besagten zumindest einen Zugstange (500) an einem zweiten Knickpunkt (22) des besagten Körpers (2) geknickt ist, sich zumindest darüber berührend, um die Verriegelung bei der Drehung des besagten Körpers (2) aufgrund des zwischen jedem zu koppelnden Abschnitt (501, 501') und dem jeweiligen Knickpunkt (22) erzeugten gegenseitigen Haltewirkung sicherzustellen.

10. Kopplungssystem (100) nach einem der Ansprüche 7 bis 9, **dadurch gekennzeichnet, dass** die besagten Zugstangen (500) Bänder (500) aus Metall, Strukturkunststoff oder Kohlefasern sind.

11. Kopplungsverfahren zum Koppeln zweier Enden mindestens einer Zugstange (500) mittels eines Kopplungselements (1) nach einem der Ansprüche 1-6, **dadurch gekennzeichnet, dass** es die folgenden Schritte umfasst:

A. Einführen eines ersten zu koppelnden Abschnitts (501) der besagten mindestens einen Zugstange (500) in den besagten Schlitz (32) des besagten Stifts (3) durch eine erste Seitenöffnung (23');
B. Einführen eines zweiten zu koppelnden Abschnitts (501') der besagten mindestens einen Zugstange (500) in den besagten Schlitz (32) des besagten Stifts (3) durch eine zweite Seitenöffnung (23") gegenüber der ersten;
C. Überlappen der zu koppelnden Abschnitte (501, 501') der besagten mindestens einen Zugstange (500) an dem besagten Schlitz (32) des besagten Stifts (3);
D. Drehen des besagten Stifts (3) um die besagte zweite Querachse (y) entlang einer ersten Drehrichtung (Φ) um mindestens eine erste halbe Drehung mittels der Drehung der besagten Madenschrauben (5); und
E. Verriegeln des besagten Stifts (3) an dem besagten Körper (2) mittels der besagten Madenschrauben (5), so, dass ihre Drehung um die besagte zweite Querachse (y) verhindert wird.

**12.** Verfahren nach Anspruch 11, **dadurch gekennzeichnet, dass** während besagten Schrittes D der besagte Stift (3) um eine Anzahl von Umdrehungen gedreht wird, um die besagten zu koppelnden Abschnitten (501, 501') der besagten mindestens einen Zugstange (500) um eine bestimmte Länge zu verkürzen und eine vorbestimmte Spannung auszuüben.

**13.** Verfahren nach Anspruch 12, **dadurch gekennzeichnet, dass** die Anzahl der Umdrehungen des besagten Stifts (3) eine Funktion der Länge (R1) des besagten Stifts (3) entlang der besagten ersten Längsachse (x), der Länge (d) der besagten zu koppelnden Abschnitte (501,501') entlang der besagten ersten Längsachse (x) und der Dicke der besagten Zugstangen (500) ist.

**14.** Verfahren nach dem vorhergehenden Anspruch, **dadurch gekennzeichnet, dass** die Anzahl der Umdrehungen als Funktion des Materials der besagten mindestens einen Zugstange (500) und der Endlänge der mindestens einen besagten Zugstange (500) berechnet wird.

**15.** Verfahren nach einem der Ansprüche 11 bis 14, **dadurch gekennzeichnet, dass** während des besagten Schrittes C jeder zu koppelnde Abschnitt (501, 501') der besagten mindestens einen Zugstange (500) so angeordnet ist, dass er teilweise aus dem besagten Schlitz (32) des besagten Stifts (3) in die Richtung entgegengesetzt zu der jeweiligen Seitenöffnung (23', 23") hervorsteht.

**16.** Verfahren nach einem der Ansprüche 11 bis 15, **dadurch gekennzeichnet, dass** der besagte Stift (3) während des besagten Schrittes D durch die Wirkung eines Bohrers oder Schraubendrehers mit einstellbarem Drehmoment zum Rotieren gebracht wird.

**17.** Baugegenstand, **dadurch gekennzeichnet, dass** er mindestens ein Bauelement umfasst, das mit einem Kopplungssystem (100) nach einem der Ansprüche 7 bis 10 verbunden ist.

**18.** Baugegenstand nach dem vorhergehenden Anspruch, **dadurch gekennzeichnet, dass** er durch Binden und/oder Wickeln mindestens eines Bauelements mit der besagten mindestens einen Zugstange (500) und Ausführen eines Verfahrens gemäß einem der Ansprüche 11 bis 17 für das Koppeln der zu koppelnden Abschnitte (501,501') der besagten mindestens einen Zugstange (500) erhalten wird.

**19.** Baugegenstand nach Anspruch 17 oder 18, **dadurch gekennzeichnet, dass** das besagte Bauelement ein Stahlbetonelement oder ein Mauerwerkselement oder ein Brückenbalken ist.

**Revendications**

**1.** Un élément de couplage (1) pour coupler deux parties devant être couplées (501, 501') d'au moins un tirant d'ancrage (500), ledit élément de couplage (1) comprend: un corps (2) comprenant deux ouvertures latérales opposées (23', 23") pour le passage d'une partie respective devant être couplée (501, 501') d'au moins un tirant d'ancrage (500), lesdites ouvertures étant disposées le long d'un premier axe longitudinal (x), une goupille (3) disposée le long d'un second axe transversale (y) sensiblement perpendiculaire audit premier axe longitudinal (x), ladite goupille (3) comprend au moins une fente (32) adaptée pour insérer lesdites parties devant être couplées (501,501'), ladite goupille (3) étant disposée entre lesdites ouvertures latérales (23', 23") et étant couplées au corps (2) de manière rotative de façon à être capable de tourner sur elles-mêmes autour dudit second axe transversale (y), et des moyens de verrouillage (5) pour verrouiller ladite goupille (3) sur ledit corps (2) de manière à empêcher la rotation sur ledit second axe transversale (y) le long d'au moins une direction rotative, où ladite goupille (3) comprend au moins un socle façonné (31), ledit élément de couplage (1) étant **caractérisée par le fait que** lesdits moyens de verrouillage (5) comprennent au moins une paire de vis sans fins (5) disposées sur ledit corps (2) le long d'une direction parallèle audit axe longitudinal (x) et entourant ladite base profilée (31), lesdites vis sans fin (5) ayant un contour complémentaire à la denture de ladite base de ladite goupille (3) et configurée de sorte que lors de l'utilisation, la rotation dudit socle façonné (31) est autorisée seulement lorsqu'un couple extérieur est appliqué auxdites vis sans fin (5) le long d'une direction rotationnelle prédéterminée (Φ), les plaçant en rotation, et de façon à empêcher leur rotations inverses dans la direction opposée à la direction déterminée (Φ) de sorte que lors de l'utilisation, lorsque lesdites parties devant être couplées (501, 501') sont insérées dans ladite fente (32) et se chevauchent après avoir traversé une ouverture latérale respective (23', 23"), lesdites parties devant être couplées (501, 501') sont couplées ensemble par ladite goupille rotative (3) sur ledit second axe transversale (y) et un verrouillage ultérieur par lesdites vis sans fins (5).

**2.** Un élément de couplage (1) selon la revendication 1, **caractérisé par le fait que** ledit corps (2) comprend une partie centrale (20) couplée à ladite goupille (3) et deux points de pliage (22) disposés de manière latérale à ladite partie centrale (20) pour le pliage desdites parties devant être couplées (501,501'), lesdites fentes d'ouvertures (23', 23") étant disposées entre un point de pliage respectif (22) et ladite partie centrale (20).

**3.** L'élément de couplage (1) selon la revendication 2, est **caractérisé par le fait que** lesdits points de pliage (22) sont deux éléments latéraux (22), de préférence de forme cylindrique, disposés de manière parallèle au second axe transversal (y), ledit corps (2) comprend deux plaques opposés (21) s'étendant sur des plans parallèles à un plan orthogonal audit second axe transversale (y) et rejoint par ces deux éléments secondaires (22) et par ladite goupille (3) de sorte que les espaces délimités par lesdites plaques (21), par ladite goupille (3) et par lesdits deux éléments latéraux (22) forment lesdites fentes d'ouvertures (23', 23").

**4.** L'élément de couplage (1) selon la revendication 2 ou 3 est **caractérisé par le fait que** les points de pliage (22) sont des bords supérieurs ou inférieurs des deux fentes (220) obtenues dans ledit corps (2) le long dudit axe longitudinal (y).

**5.** L'élément de couplage (1) selon l'une quelconque des revendications précédentes, **caractérisé par le fait que** ladite goupille (3) possède une forme sensiblement cylindrique, ladite forme sensiblement cylindrique étant disposée le long dudit second axe transversal (y), ladite fente (32) étant disposée de manière centrale dans la forme cylindrique.

**6.** L'élément de couplage (1) selon l'une quelconque des revendications précédentes, est **caractérisé par le fait qu'**il comprend au moins deux goupilles (3) pour coupler au moins deux paires de parties devant être couplées (501,501') de tirants d'ancrage (500).

**7.** Le système de couplage (100), est **caractérisé par** le fait dont il comprend un élément de couplage (1) selon l'une quelconque des revendications précédentes et au moins un tirant d'ancrage (500) comprenant deux parties devant être couplées (501, 501'), passant à travers une ouverture latérale respective (23', 23") dudit corps (2) et étant inséré dans au moins une fente (32), lesdites parties devant être couplées (501,501') se chevauchant l'une l'autre à ladite fente (32).

**8.** Le système de couplage (100) selon la revendication 7, est **caractérisé par le fait que** lesdites parties devant être couplées (501,501') d'au moins un tirant d'ancrage (500) sont couplées ensemble, étant enroulées autour de ladite goupille (3) de sorte que lesdites parties devant être couplées (501,501') sont couplées ensemble sans contraintes tangentielles sur ladite goupille (3).

**9.** Le système de couplage (100) selon les revendications 7 ou 8 lorsqu'elles dépendent de la revendication 2, est **caractérisé par le fait qu'**une première partie devant être couplée (501) d'au moins un tirant d'ancrage (500) est pliée à un premier point de pliage (22) dudit corps (2), touchant au moins en dessous, et dans une seconde partie devant être couplée (501') d'au moins un tirant d'ancrage (500) qui est plié à un second point de pliage (22) dudit corps (2), touchant au moins au-dessus de lui de manière à assurer le verrouillage de la rotation dudit corps (2) en raison du contraste généré entre chaque partie devant être couplée (501,501') et le point de pliage respectif (22).

**10.** Le système de couplage (100) selon l'une quelconque des revendications précédentes 7-9 est **caractérisé par le fait que** lesdits tirants d'ancrage (500) sont des sangles (500) faites de matériau métallique, des plastiques structurels ou des fibres de carbones.

**11.** Une méthode de couplage pour coupler deux extrémités d'au moins deux tirants d'ancrage (500) aux moyens d'un élément d'accouplement (1) selon l'une quelconque des revendications 1-6, **caractérisé par le fait qu'**il comprend les étapes suivantes:

A. l'insertion d'une première partie devant être couplée (501) à au moins un tirant d'ancrage (500) dans ladite fente (32) de ladite goupille (3), à travers une première ouverture latérale (23');
B. l'insertion d'une seconde partie devant être couplée (501') à au moins un tirant d'ancrage (500) dans lesdites fentes (32) de ladite goupille (3), traversant une ouverture latérale (23"), à l'opposé de la première;
C. le chevauchement desdites parties devant être couplées (501,501') d'au moins un tirant d'ancrage (500) à ladite fente (32) de ladite goupille (3);
D. la rotation de ladite goupille (3) autour dudit second axe transversale (y) le long d'une première direction rotationnelle (Φ) par au moins un premier demi-tour aux moyens de la rotation desdites vis sans fin (5); et

E. Le verrouillage de ladite goupille (3) sur ledit corps (2) aux moyens desdites vis sans fin (5) de manière à empêcher sa rotation autour dudit second axe transversale (y).

12. La méthode selon la revendication 11, est **caractérisée par le fait que** lors de l'étape D, ladite goupille (3) est tournée par un certain nombre de tours de manière à raccourcir lesdites parties devant être couplées (501, 501') d'au moins un point de pliage (500) par une longueur prédéterminée et imposer une tension prédéterminée.

13. La méthode selon la revendication 12, **caractérisée par le fait que** ledit nombre de tours de ladite goupille (3) est une fonction de la longueur (R1) de ladite goupille (3) le long d'un premier axe longitudinal (x), de la longueur (d) desdites parties devant être couplées (501,501') le long dudit premier axe longitudinal (x) et l'épaisseur desdits tirants d'ancrage (500).

14. La méthode selon la revendication précédente, est **caractérisée par le fait que** ledit nombre de rotations est calculé en tant que fonction du matériel d'au moins un tirant d'ancrage (500) et la longueur finale d'au moins un tirant d'ancrage (500).

15. La méthode selon l'une quelconque des revendications 11-14, est **caractérisée par le fait que** lors de l'étape C, chaque partie devant être couplée (501, 501') d'au moins un tirant d'ancrage (500) est disposé de manière à dépasser partiellement desdites fentes (32) de ladite goupille (3) dans la direction opposée des fentes d'ouvertures respectives (23', 23").

16. La méthode selon l'une quelconque des revendications 11-15 est **caractérisée par le fait que** ladite goupille (3) est faite pour tourner lors de ladite étape D par l'action d'une perceuse ou un tournevis à coupe réglable.

17. Un artéfact de construction est **caractérisé par le fait qu'**il comprend au moins un élément de construction lié au système de couplage (100) selon l'une quelconque des revendications 7-10.

18. Un artéfact de construction selon l'une quelconques des revendications précédentes, est **caractérisé par le fait qu'**il est obtenu en liant ou en enroulant au moins un élément de construction avec au moins un tirant d'ancrage (500) et de mener à bien une méthode selon l'une quelconque des revendications 11-17 pour coupler les parties devant être couplées (501,501') d'au moins un tirant d'ancrage (500).

19. Un artéfact de construction selon l'une quelconque revendication 17 ou 18, est **caractérisé par le fait que** dans ledit élément de construction un élément en béton armé est renforcé ou un élément de maçonnerie ou une poutre de pont.

**Fig. 1A**
PRIOR ART

**Fig. 1B**
PRIOR ART

**Fig. 2**

Fig. 3

Fig. 4

Fig. 5

Fig. 6

Fig. 7A

Fig. 7B

Fig. 7C

Fig. 7D

Fig. 8

Fig. 9A

Fig. 9B

Fig. 9C

Fig. 9D

Fig. 10A

Fig. 10B

Fig. 10C

Fig. 10D

Fig. 10E

Fig. 10F

Fig. 11A

Fig. 11B

Fig. 11C

Fig. 11D

Fig. 11E

Fig. 12A

φ

5

501

500

1

2

501'

500

X

200

5

3

31

212

220

**Fig. 12B**

φ

500

220

22

501

3

31

501'

22

2

500

X

5

220

1

**Fig. 12C**

## Fig. 12D

## Fig. 12E

Fig. 12F

Fig. 12G

Fig. 13

Fig. 14A

Fig. 14B

Fig. 14C

Fig. 14D

Fig. 14E

Fig. 14F

Fig. 14G

Fig. 15A

Fig. 15B

Fig. 15C

Fig. 15D

Fig. 15E

Fig. 15F

Fig. 16

Fig. 17

Fig. 18

Fig. 19

Fig. 20A

Fig. 20B

Fig. 21

Fig. 22

Rotation-tension trend as a function of the tie-rod length

Fig. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 101999900805279

- FR 2569336 A1